# EUROPEAN PATENT APPLICATION

(11) **EP 3 917 276 A1**
(43) Date of publication of application: **01.12.2021**
(21) Application number: 20745472.9
(22) Date of filing: 02.01.2020
(51) Int. Cl.: H04W 88/04

(54) **METHOD FOR DETERMINING SCHEDULING TERMINAL, TERMINAL, AND NETWORK SIDE APPARATUS**

(30) Priority: 25.01.2019 CN 201910073662
(71) Applicant: Datang Mobile Communications Equipment Co., Ltd., Beijing 100083 (CN)
(72) Inventor: ZHAO, Yali, Beijing 100191 (CN)
(74) Representative: Studio Torta S.p.A.
(86) International application number: PCT/CN2020/070116
(87) International publication number: WO 2020/151474

(57) **Abstract**

The embodiments of the present disclosure provide a method for determining a scheduling terminal, a terminal and a network side device. The method includes sending, by a first terminal, a first request message, wherein the first request message is used for searching for the scheduling terminal; receiving, by the first terminal, a first response message corresponding to the first request message sent by at least one second terminal, wherein each second terminal supports or enables a scheduling function; determining, by the first terminal, a first scheduling terminal for scheduling a resource of a direct communication interface of the first terminal, wherein the first scheduling terminal is at least one of the at least one second terminal

## Description

### CROSS-REFERENCE TO RELATED APPLICATION

This application claims a priority of the Chinese patent application No. 201910073662.4 filed on January 25, 2019, which is incorporated herein by reference in its entirety.

### TECHNICAL FIELD

The present disclosure relates to the field of communication technology, in particular to a method of determining a scheduling terminal, a terminal and a network side device.

### BACKGROUND

Direct communication between one terminal and another terminal is supported in a 5G New Radio (NR) system, a direct communication link between terminals may be referred to as Sidelink and a radio interface corresponding to the sidelink may be referred to as a direct communication interface that is a Sidelink interface. However, communication resources of the terminal are usually scheduled by a network side device, in practical applications, a poor quality of communication between the terminal and the network side device may occur or the network side device may be off the network, thereby resulting in that the terminal may not successfully receive a scheduling message sent by the network side device, so that the terminal has no resources available for data transmission on the direct communication interface.

### SUMMARY

The present disclosure provides a method of determining a scheduling terminal, a terminal and a network side device, so as to solve the problem that there is no resources available for data transmission on the direct communication interface.

Some embodiments of the present disclosure provides a method for determining a scheduling terminal, includes: sending, by a first terminal, a first request message, wherein the first request message is used for searching for the scheduling terminal; receiving, by the first terminal, a first response message corresponding to the first request message sent by at least one second terminal, wherein each second terminal supports or enables a scheduling function; determining, by the first terminal, a first scheduling terminal for scheduling a resource of a direct communication interface of the first terminal, wherein the first scheduling terminal is at least one of the at least one second terminal.

Optionally, a triggering condition for sending the first request message is an event trigger or a periodic trigger.

Optionally, a first triggering event for sending the first request message includes at least one of: a channel quality of a Uu interface of the first terminal being lower than a first threshold; or a channel quality of the direct communication interface of the first terminal being lower than a second threshold.

Optionally, in the case that the triggering condition for sending the first request message is the periodic trigger, a sending period of the first request message is determined based on the first terminal or is determined based on each service of the first terminal and a value of the sending period is determined by the first terminal or is preconfigured or configured by the network.

Optionally, the first request message includes at least one of: a service identifier of a service of the direct communication interface of the first terminal; a quality of service (QoS) identifier of the service of the direct communication interface of the first terminal; location information of the first terminal; group identification information to which the first terminal belongs; identification information of the first terminal; identification information of a corresponding terminal for communication with the first terminal; indication information indicating whether a Radio Resource Control (RRC) connection is to be established between the first terminal and the scheduling terminal.

Optionally, the service of the direct communication interface is all or part of services of the direct communication interface, wherein the part of the services include at least one of the following: a service in which data is currently to be sent; a service to be scheduled by the first scheduling terminal.

Optionally, the first response message includes at least one of: identification information of the second terminal; channel quality information between the first terminal and the second terminal; load indication information of the second terminal; power indicating information of the second terminal; moving speed information of the second terminal; channel quality information of a Uu interface of the second terminal; resource indication information allocated by the second terminal; channel quality information between the second terminal and the corresponding terminal for communication with the first terminal; location information of the second terminal. Optionally, the at least one second terminal is N second terminals, and the determining, by the first terminal, a first scheduling terminal for scheduling a resource of a direct communication interface of the first terminal includes: selecting, by the first terminal, M second terminals from the N second terminals, the M second terminals being first scheduling terminals for scheduling the resource of the direct communication interface resources of the first terminal, and wherein N is an integer greater than 1, and wherein M is an integer greater than or equal to 1 and less than or equal to N.

Optionally, the selecting, by the first terminal, M second terminals from the N second terminals, includes: selecting, by the first terminal, M second terminals from the N second terminals according to terminal information of the N second terminals; wherein the terminal information includes at least one of the following: a moving speed, a current remaining power, a load, a channel quality and location information, the channel quality includes at least one of the following: a channel quality with the first terminal; a channel quality of the Uu interface; a channel quality with the corresponding terminal for communication with the first terminal.

Optionally, the method further includes: sending, by the first terminal, an acknowledgement message to the M second terminals, wherein the acknowledgement message is used to inform the second terminal to be serve as the scheduling terminal of the first terminal or is used to request a scheduling resource on the direct communication interface.

Optionally, after the determining, by the first terminal, a first scheduling terminal for scheduling the resource of the direct communication interface of the first terminal, the method further includes: sending, by the first terminal, a second request message, wherein the second request message is used for searching for the scheduling terminal; receiving, by the first terminal, a second response message corresponding to the second request message sent by at least one third terminal, wherein each third terminal supports or enables a scheduling function; and determining, by the first terminal, a second scheduling terminal for scheduling the resource of the first terminal, wherein the second scheduling terminal is a terminal of the at least one third terminal.

Optionally, the trigger condition sent by the second request message is an event trigger. Optionally, a second triggering event sent by the second request message includes at least one of: receiving first indication information of reselection of the scheduling terminal sent by the first scheduling terminal; measuring a speed change of the first scheduling terminal exceeding a third threshold; a channel quality of the direct communication interface between the first terminal and the first scheduling terminal being lower than a fourth threshold; a channel quality of the direct communication interface between the first terminal and the corresponding terminal for communication with the first terminal being lower than a fifth threshold; QoS satisfaction of a service on the direct communication interface of the first terminal being lower than a sixth threshold.

Optionally, the first indication information for the reselection of the scheduling terminal includes at least one of: second indication information indicating the first terminal to perform the reselection of the scheduling terminal; channel quality of the Uu interface of the first scheduling terminal; indication information indicating the channel quality of the Uu interface of the first scheduling terminal is below a seventh threshold; a channel quality or a distance of the direct communication interface between the first scheduling terminal and the first terminal; a channel quality or a distance of the direct communication interface between the first scheduling terminal and the corresponding terminal for communication with the first terminal; indication information indicating the channel quality of the direct communication interface between the first scheduling terminal and the first terminal is lower than a fourth threshold; indication information indicating the distance between the first scheduling terminal and the first terminal exceeds an eighth threshold; indication information indicating the channel quality of the direct communication interface between the first scheduling terminal and the corresponding terminal for communication with the first terminal is below a ninth threshold; indication information indicating that a distance between the first scheduling terminal and the corresponding terminal for communication with the first terminal exceeds a tenth threshold; the moving speed of the first scheduling terminal; indication information indicating that a change of the moving speed of the first scheduling terminal exceeds the third threshold; a load of the first scheduling terminal; third indication information indicating that the load of the first scheduling terminal exceeds an eleventh threshold; indication information indicating that the first scheduling terminal is unwilling to continue to provide a scheduling service for the first terminal. Optionally, before the first terminal obtains a resource allocated by the second scheduling terminal, the first terminal uses a resource allocated by the first scheduling terminal for data transmission on the direct communication interface.

Optionally, the method further includes: establishing, by the first terminal, a first scheduling relationship with the first scheduling terminal.

Optionally, a trigger condition for establishing the first scheduling relationship is a third trigger event, and the third trigger event includes at least one of: the channel quality of the Uu interface of the first terminal being lower than a twelfth threshold; the channel quality of the direct communication interface of the first terminal being lower than a thirteenth threshold.

Optionally, the method further includes: establishing, by the first terminal, a second scheduling relationship with the second scheduling terminal.

Optionally, a trigger condition for establishing the second scheduling relationship is a fourth trigger event, and the fourth trigger event includes at least one of: receiving fourth indication information indicating reselection of the scheduling terminal from the first scheduling terminal; measuring a speed change of the first scheduling terminal exceeds a fourteenth threshold; the channel quality of the direct communication interface between the first terminal and the first scheduling terminal being lower than a fifteenth threshold; the channel quality of the direct communication interface between the first terminal and the corresponding terminal for communication with the first terminal being below a sixteenth threshold; the QoS satisfaction of the service of the direct communication interface of the first terminal being lower than a seventeenth threshold.

Optionally, the fourth indication information indicating the reselection of the scheduling terminal includes at least one of the following: fifth indication information indicating the first terminal to perform the reselection of the scheduling terminal; indication information indicating that the channel quality of the Uu interface of the first scheduling terminal is below an eighteenth threshold; indication information indicating that a distance between the first scheduling terminal and the first terminal exceeds a nineteenth threshold; indication information indicating that the channel quality of the direct communication interface between the first scheduling terminal and a corresponding terminal for communication with the first terminal is below a twentieth threshold; indication information indicating that a distance between the first scheduling terminal and the corresponding terminal for communication with the first terminal exceeds a twenty-first threshold; indication information indicating that the load of the first scheduling terminal exceeds a twenty-second threshold; sixth indication information indicating the first scheduling terminal is unwilling to continue to provide the scheduling service for the first terminal.

Optionally, the method further includes: sending, by the first terminal, a notification message to the first scheduling terminal, wherein the notification message is used for notifying that the first terminal has reselected a scheduling terminal; and if the first terminal establishes an RRC connection with the first scheduling terminal, releasing the RRC connection.

Some embodiments of the present disclosure provides a method for determining a scheduling terminal, includes: receiving, by a second terminal, a first request message sent by a first terminal, wherein the first request message is used for searching for the scheduling terminal; sending, by the second terminal, a first response message corresponding to the first request message to the first terminal, wherein the second terminal supports or enables a resource scheduling function.

Optionally, the first request message includes at least one of: a service identifier of a service of the direct communication interface of the first terminal; a quality of service (QoS) identifier of the service of the direct communication interface of the first terminal; location information of the first terminal; group identification information to which the first terminal belongs; identification information of the first terminal; identification information of a corresponding terminal for communication with the first terminal; indication information indicating whether a Radio Resource Control (RRC) connection is to be established between the first terminal and the scheduling terminal.

Optionally, the service of the direct communication interface is all or part of services of the direct communication interface, wherein the part of the services include at least one of the following: a service in which data is currently to be sent; a service to be scheduled by the first scheduling terminal.

Optionally, the resource scheduling function of the second terminal is enabled as follows: determining, by the second terminal, whether to enable the resource scheduling function, or determining, by the second terminal, whether to enable the resource scheduling function based on the service; or, indicating, by the network side device, whether to enable the resource scheduling function based on the terminal explicitly or implicitly; or, indicating, by the network side device, whether to enable the resource scheduling function based on the service explicitly or implicitly.

Optionally, the explicit mode includes that the second terminal receives first signaling sent by the network side device, the first signaling is used to indicate whether the second terminal needs to enable the resource scheduling function based on the terminal or based on the service; or the implicit mode includes that the second terminal receives second signaling sent by the network side device, the second signaling is used to inform an enable threshold of the resource scheduling function based on the terminal or based on the service, the second terminal determines whether to enable the resource scheduling function based on the terminal or based on the service.

Optionally, the method further includes: reporting, by the second terminal, capability indication information to the network side device, the capability indication information at least carrying capability indication information on whether the second terminal supports to serve as the scheduling terminal or capability indication information on whether the second terminal supports to serve as a scheduling terminal of a specific service.

Optionally, the first response message includes at least one of: identification information of the second terminal; channel quality information between the first terminal and the second terminal; load indication information of the second terminal; power indicating information of the second terminal; moving speed information of the second terminal; channel quality information of a Uu interface of the second terminal; resource indication information allocated by the second terminal; channel quality information between the second terminal and the corresponding terminal for communication with the first terminal; location information of the second terminal. Optionally, the method further includes: receiving, by the second terminal, an acknowledgement message sent by the first terminal, wherein the acknowledgement message is used to inform the second terminal to be serve as the scheduling terminal of the first terminal or is used to request a scheduling resource on the direct communication interface.

Optionally, if the second terminal is selected by the first terminal as a first scheduling terminal for scheduling the resource of the direct communication interface of the first terminal, the method further includes: sending, by the second terminal, first indication information for the reselection of the scheduling terminal to the first terminal. Optionally, the first indication information for the reselection of the scheduling terminal includes at least one of: second indication information indicating the first terminal to perform the reselection of the scheduling terminal; channel quality of the Uu interface of the first scheduling terminal; indication information indicating the channel quality of the Uu interface of the first scheduling terminal is below a seventh threshold; a channel quality or a distance of the direct communication interface between the first scheduling terminal and the first terminal; a channel quality or a distance of the direct communication interface between the first scheduling terminal and the corresponding terminal for communication with the first terminal; indication information indicating the channel quality of the direct communication interface between the first scheduling terminal and the first terminal is lower than a fourth threshold; indication information indicating the distance between the first scheduling terminal and the first terminal exceeds an eighth threshold; indication information indicating the channel quality of the direct communication interface between the first scheduling terminal and the corresponding terminal for communication with the first terminal is below a ninth threshold; indication information indicating that a distance between the first scheduling terminal and the corresponding terminal for communication with the first terminal exceeds a tenth threshold; the moving speed of the first scheduling terminal; indication information indicating that a change of the moving speed of the first scheduling terminal exceeds the third threshold; a load of the first scheduling terminal; third indication information indicating that the load of the first scheduling terminal exceeds an eleventh threshold; indication information indicating that the first scheduling terminal is unwilling to continue to provide a scheduling service for the first terminal. Optionally, the method further includes: if the second terminal is selected by the first terminal as a first scheduling terminal for scheduling the resource of the direct communication interface of the first terminal, and the first terminal establishes a scheduling relationship with a second scheduling terminal, receiving, by the second terminal, a notification message sent by the first terminal for notifying that the first terminal has reselected a scheduling terminal, and if the first terminal and the second terminal establish a RRC connection, releasing the RRC connection.

Some embodiments of the present disclosure provides a terminal being a first terminal, includes: a first sending module, configured to send a first request message, wherein the first request message is used for searching for the scheduling terminal; a first receiving module, configured to receive a first response message corresponding to the first request message sent by at least one second terminal, wherein each second terminal supports or enables a scheduling function; a first determining module, configured to determine a first scheduling terminal for scheduling a resource of a direct communication interface of the first terminal, wherein the first scheduling terminal is at least one of the at least one second terminal.

Optionally, the first request message includes at least one of: a service identifier of a service of the direct communication interface of the first terminal; a quality of service (QoS) identifier of the service of the direct communication interface of the first terminal; location information of the first terminal; group identification information to which the first terminal belongs; identification information of the first terminal; identification information of a corresponding terminal for communication with the first terminal; indication information indicating whether a Radio Resource Control (RRC) connection is to be established between the first terminal and the scheduling terminal.

Optionally, the first response message includes at least one of: identification information of the second terminal; channel quality information between the first terminal and the second terminal; load indication information of the second terminal; power indicating information of the second terminal; moving speed information of the second terminal; channel quality information of a Uu interface of the second terminal; resource indication information allocated by the second terminal; channel quality information between the second terminal and the corresponding terminal for communication with the first terminal; location information of the second terminal. Some embodiments of the present disclosure provides a terminal being a second terminal, includes: a first receiving module, configured to receive a first request message sent by a first terminal, wherein the first request message is used for searching for the scheduling terminal; a first sending module, configured to send a first response message corresponding to the first request message to the first terminal, wherein the second terminal supports or enables a resource scheduling function.

Optionally, the first request message includes at least one of: a service identifier of a service of the direct communication interface of the first terminal; a quality of service (QoS) identifier of the service of the direct communication interface of the first terminal; location information of the first terminal; group identification information to which the first terminal belongs; identification information of the first terminal; identification information of a corresponding terminal for communication with the first terminal; indication information indicating whether a Radio Resource Control (RRC) connection is to be established between the first terminal and the scheduling terminal.

Optionally, the first response message includes at least one of: identification information of the second terminal; channel quality information between the first terminal and the second terminal; load indication information of the second terminal; power indicating information of the second terminal; moving speed information of the second terminal; channel quality information of a Uu interface of the second terminal; resource indication information allocated by the second terminal; channel quality information between the second terminal and the corresponding terminal for communication with the first terminal; location information of the second terminal. Some embodiments of the present disclosure provides a terminal being a first terminal, includes: a transceiver, a memory, a processor, and a program stored on the memory and executed by the processor, wherein: the transceiver is configured to send a first request message, wherein the first request message is used for searching for the scheduling terminal; receive a first response message corresponding to the first request message sent by at least one second terminal, wherein each second terminal supports or enables a scheduling function; and determine a first scheduling terminal for scheduling a resource of a direct communication interface of the first terminal, wherein the first scheduling terminal is at least one of the at least one second terminal; or the transceiver is configured to send a first request message for searching for a scheduling terminal and to receive a first response message corresponding to the first request message sent by at least one second terminal, wherein each second terminal supports or enables the scheduling function; the processor is configured to determine a first scheduling terminal for scheduling the resource of the direct communication interface of the first terminal, the first scheduling terminal being at least one of the at least one second terminal. Optionally, the first request message includes at least one of: a service identifier of a service of the direct communication interface of the first terminal; a quality of service (QoS) identifier of the service of the direct communication interface of the first terminal; location information of the first terminal; group identification information to which the first terminal belongs; identification information of the first terminal; identification information of a corresponding terminal for communication with the first terminal; indication information indicating whether a Radio Resource Control (RRC) connection is to be established between the first terminal and the scheduling terminal.

Optionally, the first response message includes at least one of: identification information of the second terminal; channel quality information between the first terminal and the second terminal; load indication information of the second terminal; power indicating information of the second terminal; moving speed information of the second terminal; channel quality information of a Uu interface of the second terminal; resource indication information allocated by the second terminal; channel quality information between the second terminal and the corresponding terminal for communication with the first terminal; location information of the second terminal. Some embodiment of the present disclosure provides a terminal being a second terminal, includes: a transceiver, a memory, a processor, and a program stored on the memory and executed by the processor, wherein: the transceiver is configured to receive a first request message sent by the first terminal, the first request message being used to search a scheduling terminal; send a first response message corresponding to the first request message to the first terminal, wherein the second terminal supports or enables a resource scheduling function.

Optionally, the first request message includes at least one of: a service identifier of a service of the direct communication interface of the first terminal; a quality of service (QoS) identifier of the service of the direct communication interface of the first terminal; location information of the first terminal; group identification information to which the first terminal belongs; identification information of the first terminal; identification information of a corresponding terminal for communication with the first terminal; indication information indicating whether a Radio Resource Control (RRC) connection is to be established between the first terminal and the scheduling terminal.

Optionally, the first response message includes at least one of: identification information of the second terminal; channel quality information between the first terminal and the second terminal; load indication information of the second terminal; power indicating information of the second terminal; moving speed information of the second terminal; channel quality information of a Uu interface of the second terminal; resource indication information allocated by the second terminal; channel quality information between the second terminal and the corresponding terminal for communication with the first terminal; location information of the second terminal. Some embodiments of the present disclosure provides a computer readable storage medium having a computer program stored thereon, wherein the program is executed by a processor to implement the steps in the method for determining a scheduling terminal.

In some embodiments of the present disclosure, a first terminal sends a first request message, and the first request message is used to search for a scheduling terminal; the first terminal receives a first response message corresponding to the first request message sent by at least one second terminal, wherein each second terminal supports or enables the scheduling function; the first terminal determines the first scheduling terminal used to schedule the resource of the direct communication interface of the first terminal, and the first scheduling terminal is at least one of the at least one second terminal. This can ensure that a terminal can select a suitable scheduling terminal, and allocate the resource of the direct communication interface resources to the terminal through the selected scheduling terminal, and ensure the resource available for data transmission on the direct communication interface.

### BRIEF DESCRIPTION OF THE DRAWINGS

FIG. 1 is a schematic diagram of a network architecture according to some embodiments of the present disclosure;
FIG. 2 is a flow chart of a method of determining a scheduling terminal according to some embodiments of the present disclosure;
FIG. 3 is another flow chart of a method of determining a scheduling terminal according to some embodiments of the present disclosure;
FIG. 4 is a schematic diagram of initially selecting a scheduling terminal, according to some embodiments of the present disclosure;
FIG. 5 is a schematic diagram of reselecting a scheduling terminal according to some embodiments of the present disclosure;
FIG. 6 is a structural diagram of a terminal according to some embodiments of the present disclosure;
FIG. 7 is another structural diagram of the terminal according to some embodiments of the present disclosure;
FIG. 8 is yet another structural diagram of the terminal according to some embodiments of the present disclosure;
FIG. 9 is still yet another structural diagram of the terminal according to some embodiments of the present disclosure;
FIG. 10 is still yet another structural diagram of the terminal according to some embodiments of the present disclosure;
FIG. 11 is still yet another structural diagram of the terminal according to some embodiments of the present disclosure;
FIG. 12 is still yet another structural diagram of the terminal according to some embodiments of the present disclosure;
FIG. 13 is still yet another structural diagram of the terminal according to some embodiments of the present disclosure;
FIG. 14 is still yet another structural diagram of the terminal according to some embodiments of the present disclosure;
FIG. 15 is still yet another structural diagram of the terminal according to some embodiments of the present disclosure;
FIG. 16 is still yet another structural diagram of the terminal according to some embodiments of the present disclosure;
FIG. 17 is still yet another structural diagram of the terminal according to some embodiments of the present disclosure; and
FIG. 18 is still yet another structural diagram of the terminal according to some embodiments of the present disclosure.

### DETAILED DESCRIPTION

In order to make the technical problems, technical solutions, and advantages to be solved by the present disclosure clearer, a detailed description will be given below in conjunction with the accompanying drawings and specific embodiments.

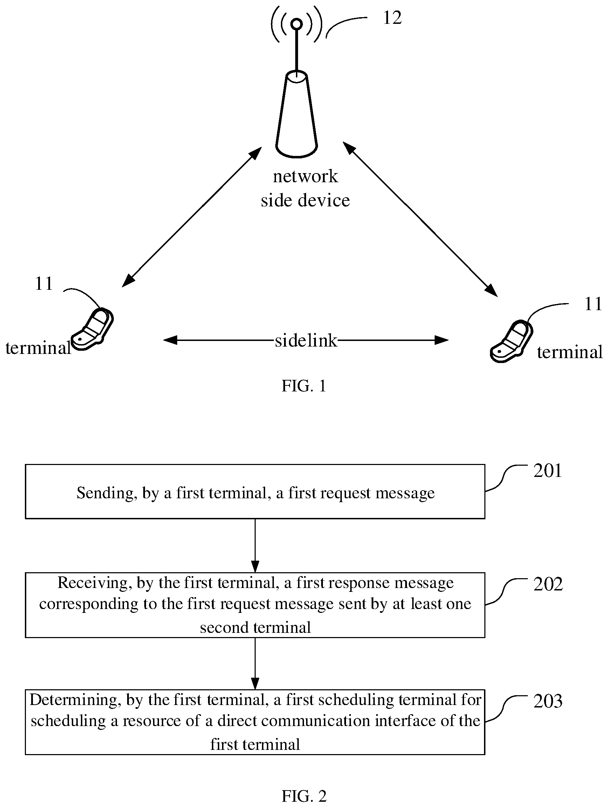

FIG. 1 shows a network architecture applicable for some embodiments of the disclosure. As shown in FIG. 1, the network architecture includes a plurality of terminals 11 and a network side device 12. The plurality of terminals may be User Equipment (UEs) or other terminal devices, such as cell phones, Tablet Personal computers (PDAs), Laptop computers, Personal Digital Assistants (PDAs), Mobile Internet Devices (MIDs), vehicle equipment or wearable devices. It should be noted that the specific types of terminals are not limited in some embodiments of the disclosure. Direct communication between the terminals 11 may be via a direct communication interface, where a link for direct communication is referred to as a Sidelink (direct communication link or bypass) and an interface corresponding to Sidelink is referred to as a direct communication interface. The terminals for direct communication may be all on the network, all off the network, some on the network, some off the network. The network side device 12 may be a base station, such as a macro station, an LTE eNB, a 5G NRNBs, etc., may be a small station, such as Low Power Node (LPN), pico, femto, etc., or may be an Access Points (AP), or may be a network node composed by a Central Units (CU) and a plurality of Distributed Units (DUs) managed and controlled by the CU. It should be noted that the specific types of the network side devices are not limited in some embodiments of the disclosure. Additionally, the terminal 11 may communicate with the network side device via a Uu interface, the Uu interface is understood as an interface for communication between the terminal 11 and the network side device 12. It should be noted that the specific types of the network side devices are not limited in some embodiments of the disclosure.

FIG. 2 is a flowchart of a method of determining a scheduling terminal, according to some embodiments of the present disclosure, which includes the following steps. 201. Sending, by a first terminal, a first request message, the first request message is used for searching for a scheduling terminal.

202. Receiving, by the first terminal, a first response message corresponding to the first request message sent by at least one second terminal, wherein each second terminal supports or enables a scheduling function.

203. Determining, by the first terminal, a first scheduling terminal for scheduling a resource of a direct communication interface of the first terminal, the first scheduling terminal being at least one of the at least one second terminal.

The first request message is used for searching for the scheduling terminal, which may be understood that the terminal receiving the first request message can determine that the first terminal is searching the scheduling terminal by the request message. In addition, the first terminal can send the first request message by broadcasting in step 201.

The first response message corresponding to the first request message may be used to indicate that the second terminal sending the response message may serve as a scheduling terminal for the first terminal. The second terminal must be a terminal supporting or enabling a scheduling function.

The step 203 is used for selecting one or more terminals from the at least one second terminal as the scheduling terminal for the first terminal, i.e. the first scheduling terminal. Upon determining the first scheduling terminal, the first terminal may establish a scheduling relation with a corresponding first scheduling device, that is, the first scheduling terminal may allocate resources used by the direct communication interface for the first terminal.

It is achieved by the above-mentioned steps that the first terminal sends a request message for searching for a scheduling terminal for the first terminal. The second terminal monitors the request message sent from the first terminal, determines whether the second terminal itself may serve as the scheduling terminal of the first terminal based on the received request message, and if yes, the second terminal sends a response message to the first terminal. It is ensured that resource allocation Mode 2d (Mode 2d) for the direct communication interface is working properly, and particularly, Mode 2d is a resource allocation mode in which the resource used by the direct communication interface of one terminal is allocated by other scheduling terminal.

As an alternative embodiment, a triggering condition for sending the first request message is an event trigger or a periodic trigger.

The first triggering event for sending the first request message includes, but is not limited to, at least one of: a channel quality of a Uu interface of the first terminal being lower than a first threshold; a channel quality of the direct communication interface of the first terminal being lower than a second threshold.

The first threshold and the second threshold may be preconfigured or configured by the network.

In case that the channel quality of the Uu and/or the direct communication interface is low, it is triggered to search for the scheduling terminal, thereby avoiding the direct communication terminal not being able to perform normal communication of the direct communication interface due to the channel quality of the Uu and/or the direct communication interface being too low, thereby improving reliability of communication of the direct communication interface.

Optionally, in the case that the triggering condition for sending the first request message is a periodic trigger, a sending period of the first request message is determined based on the first terminal or is determined based on each service of the first terminal and a value of the sending period may be determined by the first terminal itself or may be preconfigured or configured by the network.

Wherein, the sending period being determined based on the first terminal means that a unique sending period is configured for one terminal. The sending period being determined based on each service of the first terminal means that different sending periods are configured for different direct communication services of a terminal, and the sending period of the first request message is determined based on the service for triggering the sending of the first request message.

As an alternative embodiment, the first request message includes at least one of: a service identifier of a service of the direct communication interface of the first terminal; a QoS identifier of the service of the direct communication interface of the first terminal; location information of the first terminal; group identification information to which the first terminal belongs; identification information of the first terminal; identification information of a corresponding terminal for communication with the first terminal; indication information indicating whether an RRC connection is to be established between the first terminal and the scheduling terminal.

The service of the direct communication interface may be all or part of the service of the direct communication interface, wherein the part of the service may include at least one of the following: a service in which data is currently to be sent; a service to be scheduled by the first scheduling terminal.

Wherein the service identifier may be at least one of: destination ID; destination ID + Logical Channel Identifier (LCID); direct communication service identifier (ProSe service ID, PSID); intelligent traffic system application identifier (ITS-AID).

The identification information of the first terminal may be an identifier of the first terminal on the direct communication interface (ProSe UE ID). Alternatively, the corresponding terminal for communication with the first terminal may be a terminal in direct communication with the first terminal.

In this embodiment, it is possible to realize that the terminal receiving the first request message is informed by at least one of the plurality of items that the first terminal is searching for the scheduling terminal. And since at least one of the plurality of items is included, the terminal receiving the first request message may determine whether it is possible to serve as a scheduling terminal for the first terminal on the basis of more contents, so as to improve the accuracy of determining a scheduling terminal.

As an alternative embodiment, the first response message includes at least one of: identification information of the second terminal; channel quality information between the first terminal and the second terminal; load indication information of the second terminal; power indicating information of the second terminal; moving speed information of the second terminal; channel quality information of the Uu interface of the second terminal; resource indication information allocated by the second terminal; channel quality information between the second terminal and the corresponding terminal for communication with the first terminal; location information of the second terminal.

The channel quality information between the first terminal and the second terminal may be obtained based on the measurement of the first request message, but may be obtained in other ways, which is not limited herein.

The load indication information may indicate a load of the second terminal, wherein the load of the second terminal may be a current load of the second terminal, e.g. a percentage of the resource pool scheduled currently by the second terminal or a number of currently scheduling terminals, etc.

The resource indication information allocated by the second terminal may be a frequency point where the resource allocated by the second terminal is located and/or pattern indication information of a preconfigured resource supported by the second terminal.

It should be noted that in this embodiment, the second terminal refers to the second terminal sending the first response message, i.e. different second terminals may send different first response messages. For example, the second terminal 1 and the second terminal 2 send respective first response messages, and the first response message sent by the second terminal 1 includes relevant information of the second terminal 1, e.g. the identification information of the second terminal 1, and the first response message sent by the second terminal 2 includes relevant information of the second terminal 2, e.g. the identification information of the second terminal 2.

In this embodiment, since the first response message may include at least one of the plurality of items, so that the first terminal may select based on more contents, so as to select the first scheduling terminal with a better scheduling effect.

As an alternative embodiment, if the at least one second terminal is N second terminals, the determining, by the first terminal, a first scheduling terminal for scheduling the direct communication interface resources of the first terminal, includes: selecting, by the first terminal, M second terminals from the N second terminals, the M second terminals being first scheduling terminals for scheduling the resource of the direct communication interface of the first terminal, wherein N is an integer greater than 1, the M is an integer greater than or equal to 1 and less than or equal to N.

M terminals are selected from N second terminals as scheduling terminals according to a specific rule. Wherein, the rule may be determined by the first terminal or preconfigured or configured by the network.

Since the first terminal is supported to select the first scheduling terminal, the first scheduling terminal with a better scheduling effect can be selected.

Optionally, the selecting, by the first terminal, M second terminals from the N second terminals, includes: selecting, by the first terminal, M second terminals from the N second terminals according to terminal information of the N second terminals.

Wherein the terminal information includes at least one of the following: a moving speed, a current remaining power, a load, a channel quality and location information, the channel quality includes at least one of the following: a channel quality with the first terminal; a channel quality of the Uu interface; a channel quality with a corresponding terminal for communication with the first terminal.

In this embodiment, it is possible that all the second terminals transmitting the above-mentioned first response message serve as a set of candidate scheduling terminals, and the first scheduling terminal is selected based on the above-mentioned terminal information, so that the first scheduling terminal having a better scheduling effect can be selected.

For example, the selecting is implemented according to a specific rule, the specific rule may be one or a combination of the following: selecting a terminal with a lower moving speed based on moving speeds of the second terminals in the set of candidate scheduling terminals; selecting a terminal having more abundant power based on the power of the second terminals in the set of candidate scheduling terminals; selecting a terminal with a lower load based on loads of the second terminals in the set of candidate scheduling terminals; selecting a terminal with a better channel condition based on a channel quality between a second terminal in the set of the candidate scheduling terminal and the first terminal; selecting a terminal having a better Uu interface channel quality based on a Uu interface channel quality of the second terminals in the set of candidate scheduling terminals; selecting based on location information of the second terminals in the set of candidate scheduling terminals or a channel quality between the second terminal and the corresponding terminal for communication with the first terminal. Optionally, the method further includes: sending, by the first terminal, an acknowledgement message to the M second terminals, the acknowledgement message is used to inform the second terminals that it will be the scheduling terminal of the first terminal or is used to request the scheduling resource on the direct communication interface.

The acknowledgement message may be a scheduling request notification, or may be a specially designed signaling notification.

In this embodiment, the acknowledgement message is used to inform the second terminals that it will be the scheduling terminal of the first terminal or is used to request the second terminal to allocate scheduling resources at the direct communication interface for the first terminal.

Of course, in some embodiments of the present disclosure, the sending of the notification message is not limited, e.g. a notification message may also be sent to an unselected second terminal to notify that it is not selected.

Further, if an RRC connection needs to be established between the first terminal and the scheduling terminal, an RRC connection establishment procedure needs to be performed between the first terminal and the first scheduling terminal.

As an alternative embodiment, the first terminal may also perform reselection of a scheduling terminal, e.g. after the first terminal has determined a first scheduling terminal for scheduling the direct communication interface resources of the first terminal, the method further includes: sending, by the first terminal, a second request message, the second request message being used to search for the scheduling terminal; receiving, by the first terminal, a second response message corresponding to the second request message sent by at least one third terminal, wherein each third terminal supports or enables a scheduling function.

The first terminal determines a second scheduling terminal for scheduling resources of the first terminal, the second scheduling terminal being a terminal of the at least one third terminal.

The description of the second request message may be referred to the first request message, and will not be repeated herein, and the description of the second response message may be referred to the first response message, and will not be repeated herein. In this embodiment, the scheduling terminal may be reselected for the first terminal. Optionally, the trigger condition sent by the second request message is an event trigger. The second triggering event sent by the second request message includes, but is not limited to, at least one of: receiving first indication information of reselection of the scheduling terminal transmitted by the first scheduling terminal; measuring a speed change of the first scheduling terminal exceeding a third threshold; a quality of the direct communication interface channel between the first terminal and the first scheduling terminal being lower than a fourth threshold; a channel quality of the direct communication interface between the first terminal and the corresponding terminal for communication with the first terminal being lower than a fifth threshold; QoS satisfaction of a service on the direct communication interface of the first terminal being lower than a sixth threshold.

The service of the direct communication interface of the first terminal may be a service between the first terminal and the corresponding terminal for communication with the first terminal.

In this embodiment, reselection of the scheduling terminal is triggered timely and flexibly according to the second triggering event.

Optionally, the first indication information for the reselection of the scheduling terminal includes but is not limited to at least one of: second indication information indicating the first terminal to perform the reselection of the scheduling terminal; channel quality of the Uu interface of the first scheduling terminal; indication information indicating the channel quality of the Uu interface of the first scheduling terminal is below a seventh threshold; a channel quality or a distance of the direct communication interface between the first scheduling terminal and the first terminal; a channel quality or a distance of the direct communication interface between the first scheduling terminal and a corresponding terminal for communication with the first terminal; indication information indicating the quality of the direct communication interface channel between the first scheduling terminal and the first terminal is lower than a fourth threshold; indication information indicating the distance between the first scheduling terminal and the first terminal exceeds an eighth threshold; indication information indicating the channel quality of the direct communication interface between the first scheduling terminal and the corresponding terminal for communication with the first terminal is below a ninth threshold; indication information indicating that a distance between the first scheduling terminal and the corresponding terminal for communication with the first terminal exceeds a tenth threshold; the moving speed of the first scheduling terminal; indication information indicating that a change of the moving speed of the first scheduling terminal exceeds the third threshold; a load of the first scheduling terminal; indication information indicating that the load of the first scheduling terminal exceeds an eleventh threshold; indication information indicating that the first scheduling terminal is unwilling to continue to provide a scheduling service for the first terminal.

The change of the moving speed of the first scheduling terminal may be the indicate information indicating whether the speed increase or decrease exceeds a threshold.

It should be noted that the various thresholds may be preconfigured or configured by the network. In addition, when the re-selected first indication information indicates specific information (e.g., quality, distance, moving speed, load), the first terminal may also trigger the transmission of the second request message, in which case the first terminal determines whether to send the second request message based on the specific information included in the first indication information and an algorithm of the first terminal.

In this embodiment, the first scheduling terminal may flexibly trigger the first terminal to perform reselection of scheduling terminals. Of course, in some embodiments of the present disclosure, the above-mentioned manner of triggering the second request message is not limited, for example, the first scheduling terminal may send indication information including, but not limited to, one of the following, in which the first terminal determines whether to trigger the second request message based on the indication information: indication information indicating whether the first terminal performs reselection of the scheduling terminals; the channel quality of the Uu interface of the first scheduling terminal; indication information indicating whether the channel quality of the Uu interface of the first scheduling terminal is below a threshold; channel quality or distance between a first scheduling terminal and the first terminal or between the scheduling terminal and the corresponding terminal for communication with the first terminal; indication information indicating whether the channel quality or distance between a first scheduling terminal the said first terminal or between the scheduling terminal and the corresponding terminal for communication with the first terminal is below a threshold; the moving speed of the first scheduling terminal; the indication information indicating whether the change of the moving speed of the first scheduling terminal exceeds a threshold, further, whether the speed increase exceeds the threshold; the load of the first scheduling terminal; indication information indicating whether the load of the first scheduling terminal exceeds a threshold; indication information indicating whether the first scheduling terminal is willing to continue to provide a scheduling service for the first terminal.

Optionally, before the first terminal obtains resources allocated by the second scheduling terminal, the first terminal uses the resources allocated by the first scheduling terminal for data transmission on the direct communication interface.

In this embodiment, before the first terminal obtains resources allocated by a new scheduling terminal, the first terminal uses the resources allocated by the previous scheduling terminal for data transmission on the direct communication interface, service continuity in the reselection procedure can be guaranteed.

Optionally, the method further includes: establishing, by the first terminal, a second scheduling relationship with the second scheduling terminal.

The second scheduling relation is established by referring to the above corresponding description of establishing the first scheduling relation, and will not be described in detail herein.

Optionally, a trigger condition for establishing the second scheduling relationship is a fourth trigger event, and the fourth trigger event includes at least one of: receiving fourth indication information indicating reselection of the scheduling terminal from the first scheduling terminal; measuring a speed change of the first scheduling terminal exceeds a fourteenth threshold; the channel quality of the direct communication interface between the first terminal and the first scheduling terminal is lower than a fifteenth threshold; the channel quality of the direct communication interface between the first terminal and the corresponding terminal for communication with the first terminal is below a sixteenth threshold; the QoS satisfaction of the service of the direct communication interface of the first terminal is lower than a seventeenth threshold. The fourth indication information indicating the reselection of the scheduling terminal includes, but is not limited to, at least one of the following: fifth indication information indicating the first terminal to perform the reselection of the scheduling terminal; indication information indicating that the channel quality of the Uu interface of the first scheduling terminal is below an eighteenth threshold; indication information indicating that a distance between the first scheduling terminal and the first terminal exceeds a nineteenth threshold; indication information indicating that the channel quality of the direct communication interface between the first scheduling terminal and a corresponding terminal for communication with the first terminal is below a twentieth threshold; indication information indicating that a distance between the first scheduling terminal and the corresponding terminal for communication with the first terminal exceeds a twenty-first threshold; indication information indicating that the load of the first scheduling terminal exceeds a twenty-second threshold; sixth indication information indicating the first scheduling terminal is unwilling to continue to provide the scheduling service for the first terminal.

It should be noted that the fourth triggering event and the second triggering event may be the same type of triggering event, but the triggering event may correspond to different threshold values. For example, a value of the fourteenth threshold may be different from the third threshold, a value of the fifteenth threshold may be different from the fourth threshold, a value of the sixteenth threshold may be different from the fifth threshold, a value of the seventeenth threshold may be different from the sixth threshold, a value of the eighteenth threshold may be different from the seventh threshold, a value of the nineteenth threshold may be different from the eighth threshold, a value of the twentieth threshold may be different from the ninth threshold, a value of the twenty-first threshold may be different from the tenth threshold, and a value of the twenty-second threshold may be different from the eleventh threshold. In other words, the two thresholds may be configured for the triggering event for the second request message, one threshold is used to trigger the first terminal to start searching for the scheduling terminal and another threshold is used to trigger the first terminal to actually perform the change of the scheduling terminal. In this embodiment, a requirement for the one threshold for triggering the first terminal to start searching for the scheduling terminal is lower than that of the other threshold for triggering the first terminal to actually perform the change of the scheduling terminal. This has the advantage that the first terminal may perform the scheduling terminal search as soon as possible, thus ensuring that the scheduling terminal change may be quickly performed when it is required to perform the change of the scheduling terminal. Taking the channel quality of the direct communication interface between the first terminal and the first scheduling terminal as an example, the fourth threshold may be higher than the fifteenth threshold, and the second request message may be sent when the channel quality of the direct communication interface between the first terminal and the first scheduling terminal is lower than the fourth threshold, so as to determine the second scheduling terminal, thus when the channel quality of the direct communication interface between the first terminal and the first scheduling terminal is lower than the fifteenth threshold, the scheduling relation with the second scheduling terminal may be established directly, and the other thresholds may be described accordingly and not described in detail herein. Optionally, if the first terminal establishes a second scheduling relationship with the second scheduling terminal, the method further includes: sending, by the first terminal, a notification message to the first scheduling terminal, the notification message is used for notifying that the first terminal has reselected a scheduling terminal and if the first terminal establishes an RRC connection with the first scheduling terminal, releasing the RRC connection.

In this embodiment, after the first terminal and the second scheduling terminal has established the scheduling relation, the first scheduling terminal is informed that, if there is an RRC connection, the RRC connection needs to be released in order to save resources.

As an alternative embodiment, the method further includes: establishing, by the first terminal, a first scheduling relationship with the first scheduling terminal.

The establishing of the first scheduling relation may be triggered by an event, or after determining the first scheduling terminal, directly establishing the first scheduling relation with the first scheduling terminal.

Optionally, the trigger condition for establishing the first scheduling relationship is a third trigger event, and the third trigger event includes at least one of: the channel quality of the Uu interface of the first terminal is lower than a twelfth threshold; the channel quality of the direct communication interface of the first terminal is lower than a thirteenth threshold.

Wherein a value of the twelfth threshold may be different from the first threshold and a value of the thirteenth threshold may be different from the second threshold.

In this embodiment, different triggering events are used to trigger the transmission of the first request message and the establishment of the first scheduling relationship, so as to improve the efficiency of the establishment of the first scheduling relationship. For example, taking the channel quality of the Uu interface of the first terminal as an example, the first threshold may be larger a twelfth threshold, and when the channel quality of the Uu interface of the first terminal is below the first threshold, the first request message may be transmitted, thereby determining the first scheduling terminal, so that when the channel quality of the Uu interface of the first terminal is below the twelfth threshold, the scheduling relationship may be directly established with the first scheduling terminal, and other thresholds may be described accordingly and will not be described in detail herein.

In some embodiments of the present disclosure, the first terminal transmits a first request message for searching for a scheduling terminal; the first terminal receives a first response message corresponding to the first request message transmitted by at least one second terminal each supporting or enabling a scheduling function; and the first terminal determines a first scheduling terminal for scheduling resource of the direct communication interface of the first terminal, the first scheduling terminal is at least one second terminals. This enables the terminal to search and select the scheduling terminal to support the scheduling terminal to schedule the resource of the direct communication interface of the first terminal for the terminal, thereby improving communication performance of the terminal.

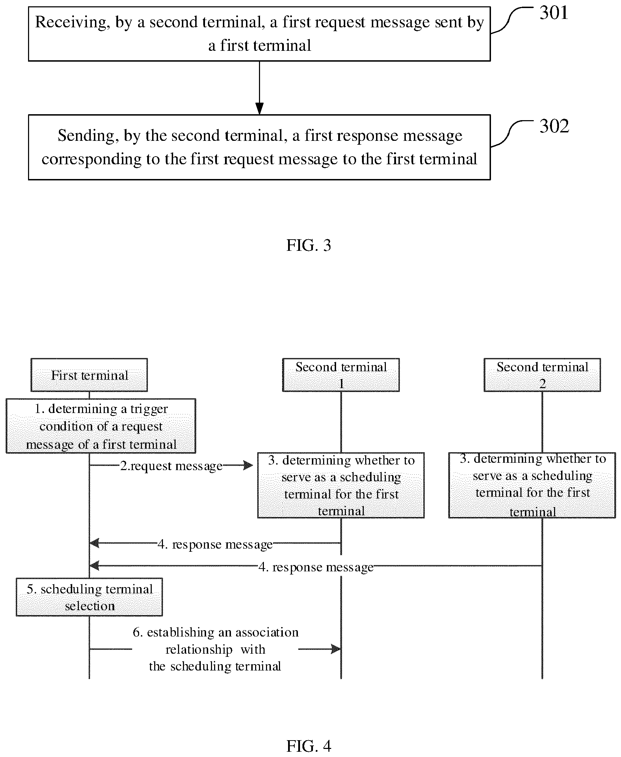

FIG. 3 is a flow chart of another method for determining a scheduling terminal according to some embodiments of the present disclosure, the method includes the following steps:
301, receiving, by a second terminal, a first request message sent by a first terminal, the first request message being used for searching for a scheduling terminal;
302, sending, by the second terminal, a first response message corresponding to the first request message to the first terminal, wherein the second terminal supports or enables a resource scheduling function.

Optionally, the first request message includes at least one of: a service identifier of a service of a direct communication interface of the first terminal; a QoS identifier of the service of the direct communication interface of the first terminal; location information of the first terminal; group identification information to which the first terminal belongs; identification information of the first terminal; identification information of a corresponding terminal for communication with the first terminal; indication information indicating whether an RRC connection is to be established between the first terminal and the scheduling terminal.

Optionally, service of the direct communication interface may be all or part of the service of the direct communication interface, wherein the part of the service may include at least one of the following: a service in which data is currently to be sent; a service to be scheduled by the first scheduling terminal.

Optionally, the resource scheduling function of the second terminal is enabled as follows: determining, by the second terminal, whether to enable the resource scheduling function, or determining ,by the second terminal, whether to enable the resource scheduling function based on the service; or, indicating, by the network side device, whether to enable the resource scheduling function based on the terminal, either explicitly or implicitly; or, indicating, by the network side device, whether to enable the resource scheduling function based on the service, either explicitly or implicitly.

In one embodiment, the determining, by the second terminal, whether to enable the resource scheduling function may be based on the granularity of the terminal, i.e. all types of service may be scheduled by the terminal when the scheduling function is enabled. The determining, by the second terminal, whether to enable the resource scheduling function may be based on the service, and if the determining is based on the service, once the scheduling function is enabled, the resources of the direct communication interface may only be allocated for a specific service.

Optionally, the explicit mode includes that the second terminal receives first signaling transmitted by the network side device, the first signaling is used to indicate whether the second terminal needs to enable the resource scheduling function based on terminal or based on service; or the implicit mode includes that the second terminal receives second signaling sent by the network side device, the second signaling is used to inform an enable threshold of the resource scheduling function based on terminal or based on service, the second terminal determines whether to enable the resource scheduling function based on terminal or based on service.

The first signaling may be a dedicated control signaling (e.g. RRC signaling, MAC signaling or physical layer signaling).

The second signaling may be a threshold for notifying the scheduling function is enabled through broadcasting or dedicated signalling, and the terminal having the scheduling function determines whether to enable the scheduling function based on the threshold. The threshold may include, but is not limited to, a threshold of link quality of the Uu interface.

Optionally, the method further includes: reporting, by the second terminal, capability indication information to the network side device, the capability indication information at least carrying capability indication information on whether the second terminal supports to serve as a scheduling terminal or capability indication information on whether the second terminal supports to serve as a scheduling terminal of a specific service.

The specific service may be one or more of a plurality of services supported by the second terminal, the service may be pre-configured or configured by the network, etc. In this embodiment, the network side can be made to accurately configure whether to enable the resource scheduling function of the second terminal by reporting capability indication information.

Optionally, the first response message includes at least one of: identification information of the second terminal; channel quality information between the first terminal and the second terminal; load indication information of the second terminal; power indicating information of the second terminal; moving speed information of the second terminal; channel quality information of the Uu interface of the second terminal; resource indication information allocated by the second terminal; channel quality information between the second terminal and the corresponding terminal for communication with the first terminal; location information of the second terminal. Optionally, the method further includes: receiving, by the second terminal, an acknowledgement message transmitted by the first terminal, the acknowledgement message is used to inform the second terminals that it will be the scheduling terminal of the first terminal or is used to request the scheduling resource on the direct communication interface.

Optionally, if the second terminal is selected by the first terminal as a first scheduling terminal for scheduling the resource of the direct communication interface of the first terminal, the method further includes: sending, by the second terminal, first indication information for the reselection of the scheduling terminal to the first terminal. Optionally, the first indication information for the reselection of the scheduling terminal includes at least one of: second indication information indicating the first terminal to perform the reselection of the scheduling terminal; channel quality of the Uu interface of the first scheduling terminal; indication information indicating the channel quality of the Uu interface of the first scheduling terminal is below a seventh threshold; a channel quality or a distance of the direct communication interface between the first scheduling terminal and the first terminal; a channel quality or a distance of the direct communication interface between the first scheduling terminal and a corresponding terminal for communication with the first terminal; indication information indicating the quality of the direct communication interface channel between the first scheduling terminal and the first terminal is lower than a fourth threshold; indication information indicating the distance between the first scheduling terminal and the first terminal exceeds an eighth threshold; indication information indicating the channel quality of the direct communication interface between the first scheduling terminal and the corresponding terminal for communication with the first terminal is below a ninth threshold; indication information indicating that a distance between the first scheduling terminal and the corresponding terminal for communication with the first terminal exceeds a tenth threshold; the moving speed of the first scheduling terminal; indication information indicating that a change of the moving speed of the first scheduling terminal exceeds the third threshold; a load of the first scheduling terminal; indication information indicating that the load of the first scheduling terminal exceeds an eleventh threshold; indication information indicating that the first scheduling terminal is unwilling to continue to provide a scheduling service for the first terminal. Optionally, the method further includes: if the second terminal is selected by the first terminal as a first scheduling terminal for scheduling the resource of the direct communication interface of the first terminal, and the first terminal establishes a scheduling relationship with a second scheduling terminal, receiving, by the second terminal, a notification message transmitted by the first terminal for notifying that the first terminal has reselected a scheduling terminal, and if the first terminal and the second terminal establish a RRC connection, releasing the RRC connection.

It should be noted that the first request message in the embodiment may sent during the initial selection of the scheduling terminal by the first terminal, or sent during the reselection of the scheduling terminal by the first terminal (e.g., a second request message in the embodiment shown in FIG. 2), or the first response message may be sent during the initial selection of the scheduling terminal by the first terminal, or sent during the reselection of the scheduling terminal by the first terminal (e.g., a second response message in the embodiment shown in FIG. 2), i.e., the second terminal may be an initial selection scheduling terminal of the first terminal, or a reselection scheduling terminal of the first terminal (e.g., a third terminal in the embodiment shown in FIG. 2).

It should be noted that the embodiment is the implementation of the second terminal corresponding to the embodiment of FIG. 2, the specific implementation may refer to the description of the embodiment shown in FIG. 2, and it will not be repeated here in order to avoid repetition of the description, and the same advantageous effects may be achieved.

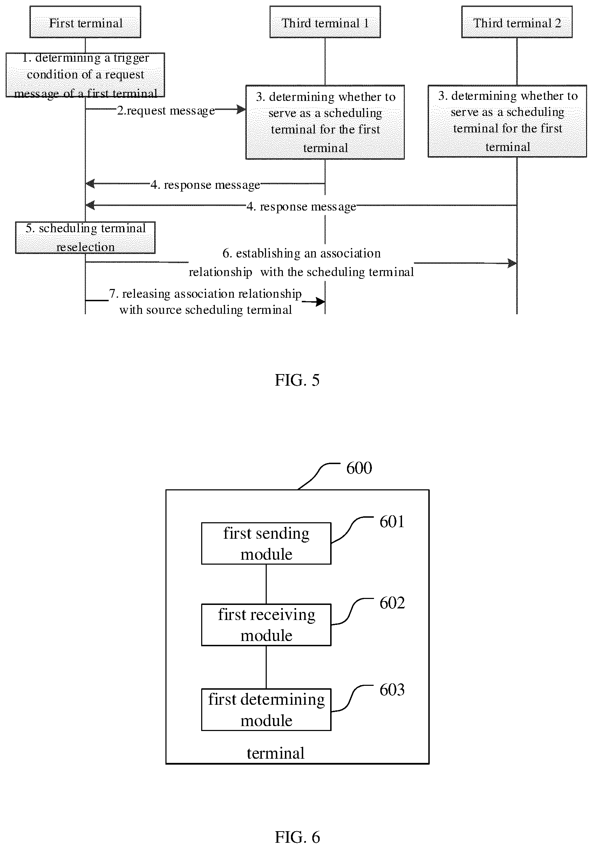

Some embodiments of the present disclosure provide a method for determining the scheduling terminal illustrated in FIGS 4 and 5.

In one embodiment, the initial selection of the scheduling terminal is taken as an example, as shown in FIG. 4, the following steps are included.

Step 1: determining a trigger condition of a request message of a first terminal. Wherein, the request message is used to search for the scheduling terminal for the first terminal.

For the initial selection of the scheduling terminal, when the trigger condition of the request message is met, the first terminal is triggered to send the request message. The request message may be transmitted by using a specific channel.

The triggering condition for the first terminal to send the request message include, but are not limited to, an event trigger and a periodic trigger.

The event trigger: the channel quality of the Uu interface of the first terminal is below a threshold or a channel quality of a current direct communication interface is below a threshold. The threshold may be pre-configured or configured by the network.

The periodic trigger: the request message is sent based on a certain period, the sending period may be determined based on the terminal, or based on a current service of the terminal. It may be determined by the terminal itself, or it may be preconfigured or configured by the network.

### Step 2: sending the first request message.

When the trigger condition of the request message is met in step 1, the first terminal sends the request message. The request message content includes at least one of, but is not limited to: a service identifier of a service or a QoS identifier of the service of a direct communication interface of the first terminal; wherein the service of the direct communication interface may be all or part of the service of the direct communication interface, the part of the service is a service in which data is currently to be sent or a service to be scheduled by the first scheduling terminal; location information of the first terminal; group identification information to which the first terminal belongs; identification information of the first terminal; identification information of a corresponding terminal for communication with the first terminal; indication information indicating whether an RRC connection is to be established between the first terminal and the scheduling terminal.

### Step 3: determining whether the second terminal may be serve as a scheduling terminal for the first terminal.

The second terminal has the scheduling function and enables the scheduling function. The scheduling function of the second terminal may be enabled in two methods. Method 1: the terminal determines whether to enable the scheduling function. Method 2: the network side device controls to enable the scheduling function, either explicitly or implicitly.

In the explicit mode, the network side device informs the terminal whether to enable the scheduling function through a dedicated control signalling, which may be RRC signalling, MAC signalling or physical layer signalling.

In the implicit mode, the network side device informs a threshold for enabling the scheduling function by broadcasting or dedicated signaling, and the terminal with the scheduling function determines whether to enable the scheduling function based on the threshold. The threshold includes but are not limited to a threshold for the quality of the Uu interface link.

Further, when the threshold is notified by a specific singling in the implicit mode and the explicit mode, the terminal needs to report to the network side device a terminal capability indication information at least carrying function indication information indicating whether the terminal supports to serve as a scheduling terminal.

The second terminal monitors a specific channel, receives a request message transmitted by the first terminal, and determines whether it can be a scheduling terminal of the first terminal.

### Step 4: sending, by the second terminal, a response message to the first terminal.

In step 3, if the second terminal determines to serve as the scheduling terminal of the first terminal, a response message is transmitted to the first terminal.

The content of the response message includes at least one of, but is not limited to: terminal identification information of the second terminal; a channel quality (obtained based on request message measurement) between the first terminal and the second terminal; load indication information of the second terminal (e.g., a percentage of the resource pool scheduled currently by the second terminal or a number of currently scheduling terminals); power indicating information of the second terminal; a moving speed of the second terminal; the channel quality of the Uu interface of the second terminal; a frequency point where the resource allocated by the second terminal is located and/or pattern indication information of a preconfigured resource supported by the second terminal; channel quality between a second terminal and the corresponding terminal for communication with the first terminal; location information of the second terminal.

### Step 5: performing, by the first terminal, scheduling terminal selection.

Optionally, if the first terminal is able to receive response messages from N (N >1) second terminals, the first terminal further performs a scheduling terminal screening procedure. All second terminals that sent the response messages will be a set of candidate scheduling terminals, from which M (M >1) terminals are selected as scheduling terminals according to a specific rule. The specific rule may be one or a combination of the following rules: selecting a terminal with a lower moving speed based on moving speeds of the second terminals in the set of candidate scheduling terminals; selecting a terminal having more abundant power based on the power of the second terminals in the set of candidate scheduling terminals; selecting a terminal with a lower load based on loads of the second terminals in the set of candidate scheduling terminals; selecting a terminal with a better channel condition based on a channel quality between a second terminal in the set of the candidate scheduling terminal and the first terminal; selecting a terminal having a better Uu interface channel quality based on a Uu interface channel quality of the second terminals in the set of candidate scheduling terminals; selecting based on location information of the second terminals in the set of candidate scheduling terminals or a channel quality between the second terminal and the corresponding terminal for communication with the first terminal. Step 6: establishing an association relationship (i.e. scheduling relationship) with the scheduling terminal.

Optionally, the association relationship may be such that the first terminal has selected a scheduling terminal and needs to notify the scheduling terminal. The notification may be transmitted through a scheduling request or through a specially designed signalling. If an RRC connection needs to be established before scheduling between the scheduling terminal and the first terminal, the first terminal may initiate an RRC connection establishment procedure to the scheduling terminal.

In another embodiment, the reselection of the scheduling terminal is taken as an example, as shown in FIG. 5, the following steps are included.

### Step 1: determining a trigger condition of a request message.

The request message is used to search for scheduling terminals for the first terminal. Wherein, the request message is used to search for the scheduling terminal for the first terminal.

For the initial selection of the scheduling terminal, when the trigger condition of the request message is met, the first terminal is triggered to send the request message. The request message may be transmitted by using a specific channel.

For the reselection of the scheduling terminal, the trigger condition for the first terminal to send the request message is an event trigger. Specific trigger events include: scheduling terminal reselection indication information transmitted by the scheduling terminal of the first terminal is received; the first terminal has measured the speed change of the scheduling terminal; the channel quality of the direct communication interface between the first terminal and the scheduling terminal is below a threshold; the channel quality between the first terminal and the corresponding terminal for communication with the first terminal is below a threshold or the QoS satisfaction of the service is below a threshold.

The content of the reselection indication information mentioned in the triggering event includes at least one of, but is not limited to, the following: indication information indicating that the first terminal performs the reselection of the scheduling terminal; the channel quality of the Uu interface of the scheduling terminal; indication information indicating that the channel quality of the Uu interface of the scheduling terminal is below a threshold; a channel quality or distance between the scheduling terminal and the first terminal or between the scheduling terminal and the corresponding terminal for communication with the first terminal; indication information indicating that a channel quality or distance between the scheduling terminal and the first terminal or between the scheduling terminal and the corresponding terminal for communication with the first terminal is below a threshold; the moving speed of the scheduling terminal; indication information indicating that a change of the moving speed of the scheduling terminal exceeds a threshold; indication information indicating that the scheduling terminal is unwilling to provide the scheduling service for the first terminal.

Further, as an optimization, in order to support fast reselection of the scheduling terminal, two thresholds in step 1 may be configured, one threshold is used to trigger the first terminal to start searching for the scheduling terminal and the other threshold is used to trigger the first terminal to actually perform the change of the scheduling terminal.

### Step 2: sending the request message

When the trigger condition of the request message is met in step 1, the first terminal sends the request message. The request message content includes at least one of, but is not limited to: a service identifier of a service or a QoS identifier of the service of a direct communication interface of the first terminal; wherein the service of the direct communication interface may be all or part of the service of the direct communication interface, the part of the service is a service in which data is currently to be sent or a service to be scheduled by the first scheduling terminal; location information of the first terminal; group identification information to which the first terminal belongs; identification information of the first terminal, such as an identification ProSe UE ID of the terminal on the direct communication interface; identification information of a corresponding terminal for communication with the first terminal; indication information indicating whether an RRC connection is to be established between the first terminal and the scheduling terminal.

### Step 3: determining whether the third terminal may be serve as a scheduling terminal for the first terminal.

The third terminal has the scheduling function and enables the scheduling function. The scheduling function of the third terminal may be enabled in two methods. Method 1: the terminal determines whether to enable the scheduling function. Method 2: the network side device controls to enable the scheduling function, either explicitly or implicitly.

In the explicit mode, the network side device informs the terminal whether to enable the scheduling function through a dedicated control signalling, which may be RRC signalling, MAC signalling or physical layer signalling.

In the implicit mode, the network side device informs a threshold for enabling the scheduling function by broadcasting or dedicated signaling, and the terminal with the scheduling function determines whether to enable the scheduling function based on the threshold. The threshold includes but are not limited to a threshold for the quality of the Uu interface link.

Further, when the threshold is notified by a specific singling in the implicit mode and the explicit mode, the terminal needs to report to the network side device a terminal capability indication information at least carrying function indication information indicating whether the terminal supports to serve as a scheduling terminal.

The third terminal monitors a specific channel, receives a request message transmitted by the first terminal, and determines whether it can be a scheduling terminal of the first terminal.

### Step 4: sending, by the third terminal, a response message to the first terminal.

In step 3, if the third terminal determines to serve as the scheduling terminal of the first terminal, a response message is transmitted to the first terminal.

The content of the response message includes at least one of, but is not limited to: terminal identification information of the third terminal; a channel quality (obtained based on request message measurement) between the first terminal and the third terminal; load indication information of the third terminal (e.g., a percentage of the resource pool scheduled currently by the second terminal or a number of currently scheduling terminals); power indicating information of the third terminal; a moving speed of the third terminal; the channel quality of the Uu interface of the third terminal; a frequency point where the resource allocated by the third terminal is located and/or pattern indication information of a preconfigured resource supported by the third terminal; channel quality between a third terminal and the corresponding terminal for communication with the first terminal; location information of the third terminal.

### Step 5: performing, by the first terminal, scheduling terminal reselection.

Optionally, if the first terminal is able to receive response messages from N (N > 1) third terminals, the first terminal further performs a scheduling terminal screening procedure. All third terminals that sent the response messages will be a set of candidate scheduling terminals, from which M (M >1) terminals are selected as scheduling terminals according to a specific rule. The specific rule may be one or a combination of the following rules: selecting a terminal with a lower moving speed based on moving speeds of the third terminals in the set of candidate scheduling terminals; selecting a terminal having more abundant power based on the power of the third terminals in the set of candidate scheduling terminals; selecting a terminal with a lower load based on loads of the third terminals in the set of candidate scheduling terminals; selecting a terminal with a better channel condition based on a channel quality between a third terminal in the set of the candidate scheduling terminal and the first terminal; selecting a terminal having a better Uu interface channel quality based on a Uu interface channel quality of the third terminals in the set of candidate scheduling terminals; selecting based on location information of the third terminals in the set of candidate scheduling terminals or a channel quality between the third terminal and the corresponding terminal for communication with the first terminal.

### Step 6: establishing an association relationship (i.e. scheduling relationship) with the new scheduling terminal.

Optionally, the association relationship may be such that the first terminal has selected a scheduling terminal and needs to notify the scheduling terminal. The notification may be transmitted through a scheduling request or through a specially designed signalling. If an RRC connection needs to be established before scheduling between the scheduling terminal and the first terminal, the first terminal may initiate an RRC connection establishment procedure to the scheduling terminal.

Optionally, in order to ensure continuity of service in the reselection procedure, before the first terminal obtains the resource allocated by the new scheduling terminal, the resource allocated by a source scheduling terminal is still used for data transmission on the direct communication interface.

### Step 7: Releasing association relationship with source scheduling terminal

Optionally, after the association relationship is established between the first terminal and the new target scheduling terminal, the source scheduling terminal needs to be informed about the association relationship, and if there is an RRC connection, the RRC connection needs to be released.

FIG. 6 is a block diagram of a terminal according to some embodiments of the present disclosure, which is the first terminal. As shown in FIG. 6, the terminal 600 includes: a first sending module 601, configured to send a first request message for searching for the scheduling terminal; a first receiving module 602, configured to receive a first response message corresponding to the first request message sent by at least one second terminal each supporting or enabling a scheduling function; a first determining module 603, configured to determine a first scheduling terminal for scheduling a resource of a direct communication interface of the first terminal, the first scheduling terminal being at least one of the at least one second terminal.

Optionally, a triggering condition for sending the first request message is an event trigger or a periodic trigger.

The first triggering event for sending the first request message includes at least one of: a channel quality of a Uu interface of the first terminal being lower than a first threshold; a channel quality of the direct communication interface of the first terminal being lower than a second threshold.

Optionally, in the case that the triggering condition for sending the first request message is a periodic trigger, a sending period of the first request message is determined based on the first terminal or is determined based on each service of the first terminal and a value of the sending period may be determined by the first terminal itself or may be preconfigured or configured by the network.

Optionally, the first request message includes at least one of: a service identifier of a service of the direct communication interface of the first terminal; a QoS identifier of the service of the direct communication interface of the first terminal; location information of the first terminal; group identification information to which the first terminal belongs; identification information of the first terminal; identification information of a corresponding terminal for communication with the first terminal; indication information indicating whether an RRC connection is to be established between the first terminal and the scheduling terminal.

Optionally, service of the direct communication interface may be all or part of the service of the direct communication interface, wherein the part of the service may include at least one of the following: a service in which data is currently to be sent; a service to be scheduled by the first scheduling terminal.

Optionally, the first response message includes at least one of: identification information of the second terminal; channel quality information between the first terminal and the second terminal; load indication information of the second terminal; power indicating information of the second terminal; moving speed information of the second terminal; channel quality information of the Uu interface of the second terminal; resource indication information allocated by the second terminal; channel quality information between the second terminal and the corresponding terminal for communication with the first terminal; location information of the second terminal. Optionally, the at least one second terminal is N second terminals, and the first determining module 603 is configured to select M second terminals from the N second terminals, the M second terminals being first scheduling terminals for scheduling the resource of the direct communication interface resources of the first terminal, and wherein N is an integer greater than 1, and wherein M is an integer greater than or equal to 1 and less than or equal to N.

Optionally, a first determining module 603 is configured to select M second terminals from the N second terminals according to terminal information of the N second terminals.

Wherein the terminal information includes at least one of the following: a moving speed, a current remaining power, a load, a channel quality and location information, the channel quality includes at least one of the following: a channel quality with the first terminal; a channel quality of the Uu interface; a channel quality with a corresponding terminal for communication with the first terminal.

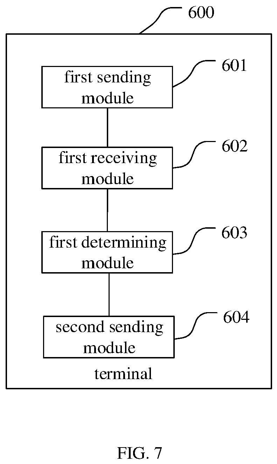

Optionally, as shown in FIG. 7, the terminal 600 further includes: a second sending module 604, configured to send an acknowledgement message to the M second terminals, the acknowledgement message is used to inform the second terminals that it will be the scheduling terminal of the first terminal or is used to request the scheduling resource on the direct communication interface.

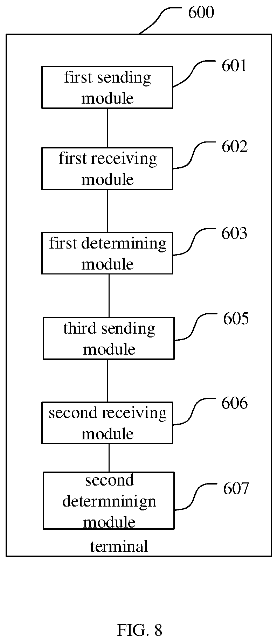

Optionally, as shown in FIG. 8, the terminal 600 further includes: a third sending module 605, configured to send a second request message for searching for the scheduling terminal; a second receiving module 606, configured to receive a second response message corresponding to the second request message sent by at least one third terminal, wherein each third terminal supports or enables a scheduling function; and a second determining module 607, configured to determine a second scheduling terminal for scheduling the resource of the first terminal, the second scheduling terminal being a terminal of the at least one third terminal.

Optionally, the trigger condition sent by the second request message is an event trigger. Optionally, the second triggering event sent by the second request message includes at least one of: receiving first indication information of reselection of the scheduling terminal transmitted by the first scheduling terminal; measuring a speed change of the first scheduling terminal exceeding a third threshold; a quality of the direct communication interface channel between the first terminal and the first scheduling terminal being lower than a fourth threshold; a channel quality of the direct communication interface between the first terminal and the corresponding terminal for communication with the first terminal being lower than a fifth threshold; QoS satisfaction of a service on the direct communication interface of the first terminal being lower than a sixth threshold.

Optionally, the first indication information for the reselection of the scheduling terminal includes at least one of: second indication information indicating the first terminal to perform the reselection of the scheduling terminal; channel quality of the Uu interface of the first scheduling terminal; indication information indicating the channel quality of the Uu interface of the first scheduling terminal is below a seventh threshold; a channel quality or a distance of the direct communication interface between the first scheduling terminal and the first terminal; a channel quality or a distance of the direct communication interface between the first scheduling terminal and a corresponding terminal for communication with the first terminal; indication information indicating the quality of the direct communication interface channel between the first scheduling terminal and the first terminal is lower than a fourth threshold; indication information indicating the distance between the first scheduling terminal and the first terminal exceeds an eighth threshold; indication information indicating the channel quality of the direct communication interface between the first scheduling terminal and the corresponding terminal for communication with the first terminal is below a ninth threshold; indication information indicating that a distance between the first scheduling terminal and the corresponding terminal for communication with the first terminal exceeds a tenth threshold; the moving speed of the first scheduling terminal; indication information indicating that a change of the moving speed of the first scheduling terminal exceeds the third threshold; a load of the first scheduling terminal; indication information indicating that the load of the first scheduling terminal exceeds an eleventh threshold; indication information indicating that the first scheduling terminal is unwilling to continue to provide a scheduling service for the first terminal.

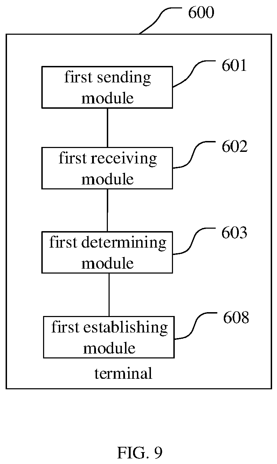

Optionally, before the first terminal obtains resources allocated by the second scheduling terminal, the first terminal uses the resources allocated by the first scheduling terminal for data transmission on the direct communication interface. Optionally, as shown in FIG. 9, the terminal 600 further includes: a first establishing module 608, configured to establish a first scheduling relationship with the first scheduling terminal.

Optionally, the trigger condition for establishing the first scheduling relationship is a third trigger event, and the third trigger event includes at least one of: the channel quality of the Uu interface of the first terminal is lower than a twelfth threshold; the channel quality of the direct communication interface of the first terminal is lower than a thirteenth threshold.

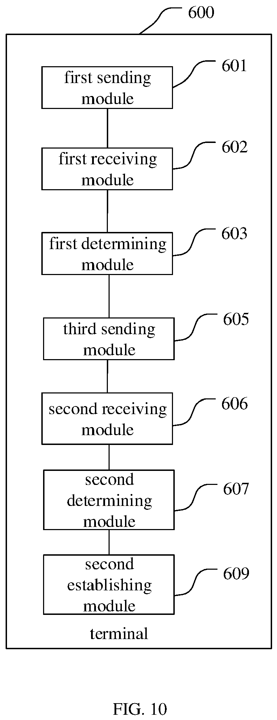

Optionally, as shown in FIG. 10, the terminal 600 further includes a second establishing module 609, configured to establish a second scheduling relationship with the second scheduling terminal.

Optionally, a trigger condition for establishing the second scheduling relationship is a fourth trigger event, and the fourth trigger event includes at least one of: receiving fourth indication information indicating reselection of the scheduling terminal from the first scheduling terminal; measuring a speed change of the first scheduling terminal exceeds a fourteenth threshold; the channel quality of the direct communication interface between the first terminal and the first scheduling terminal is lower than a fifteenth threshold; the channel quality of the direct communication interface between the first terminal and the corresponding terminal for communication with the first terminal is below a sixteenth threshold; the QoS satisfaction of the service of the direct communication interface of the first terminal is lower than a seventeenth threshold. The fourth indication information indicating the reselection of the scheduling terminal includes, but is not limited to, at least one of the following: fifth indication information indicating the first terminal to perform the reselection of the scheduling terminal; indication information indicating that the channel quality of the Uu interface of the first scheduling terminal is below an eighteenth threshold; indication information indicating that a distance between the first scheduling terminal and the first terminal exceeds a nineteenth threshold; indication information indicating that the channel quality of the direct communication interface between the first scheduling terminal and a corresponding terminal for communication with the first terminal is below a twentieth threshold; indication information indicating that a distance between the first scheduling terminal and the corresponding terminal for communication with the first terminal exceeds a twenty-first threshold; indication information indicating that the load of the first scheduling terminal exceeds a twenty-second threshold; sixth indication information indicating the first scheduling terminal is unwilling to continue to provide the scheduling service for the first terminal.

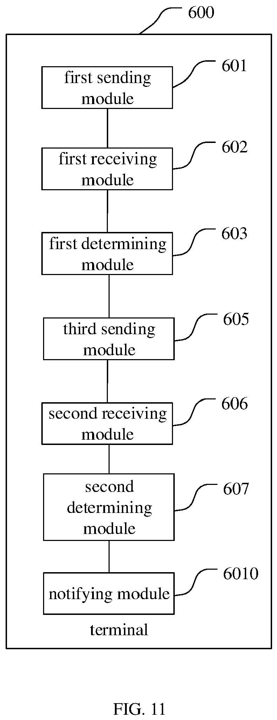

Optionally, as shown in FIG. 11, the terminal 600 further includes: a notifying module 6010, configured to send a notification message to the first scheduling terminal, the notification message is used for notifying that the first terminal has reselected a scheduling terminal and if the first terminal establishes an RRC connection with the first scheduling terminal, release the RRC connection.

It should be noted that the terminal 600 in the present embodiment may be the first terminal in any method embodiment in the present disclosure. Any embodiment of the terminal in the method embodiments may be implemented by the terminal 600 in the present embodiment, and the same benefits may be achieved, the description is not repeated herein.

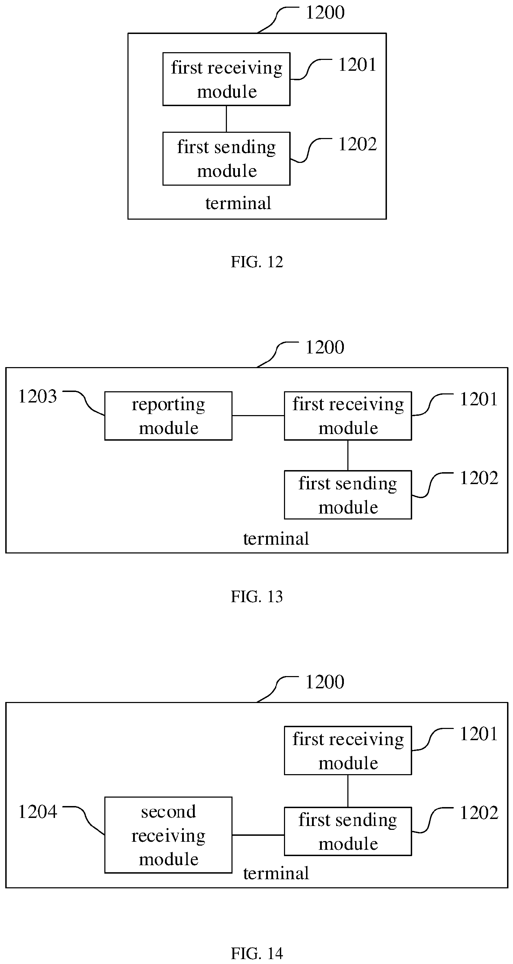

FIG. 12 is a block diagram of another terminal according to some embodiments of the present disclosure; the terminal is a second terminal and includes: a first receiving module 1201, configured to receive a first request message sent by the first terminal, the first request message being used to search a scheduling terminal; a first sending module 1202, configured to send a first response message corresponding to the first request message to the first terminal, wherein the second terminal supports or enables a resource scheduling function.

Optionally, the first request message includes at least one of: a service identifier of a service of a direct communication interface of the first terminal; a QoS identifier of the service of the direct communication interface of the first terminal; location information of the first terminal; group identification information to which the first terminal belongs; identification information of the first terminal; identification information of a corresponding terminal for communication with the first terminal; indication information indicating whether an RRC connection is to be established between the first terminal and the scheduling terminal.

Optionally, service of the direct communication interface may be all or part of the service of the direct communication interface, wherein the part of the service may include at least one of the following: a service in which data is currently to be sent; a service to be scheduled by the first scheduling terminal.

Optionally, the resource scheduling function of the second terminal is enabled as follows: determining, by the second terminal, whether to enable the resource scheduling function, or determining, by the second terminal, whether to enable the resource scheduling function based on the service; or, indicating, by the network side device, whether to enable the resource scheduling function based on the terminal, either explicitly or implicitly; or, indicating, by the network side device, whether to enable the resource scheduling function based on the service, either explicitly or implicitly. Optionally, the explicit mode includes that the second terminal receives first signaling transmitted by the network side device, the first signaling is used to indicate whether the second terminal needs to enable the resource scheduling function based on terminal or based on service; or the implicit mode includes that the second terminal receives second signaling sent by the network side device, the second signaling is used to inform an enable threshold of the resource scheduling function based on terminal or based on service, the second terminal determines whether to enable the resource scheduling function based on terminal or based on service.

Optionally, as shown in FIG. 13, the terminal 1200 further includes: a reporting module 1203, configured to report capability indication information to the network side device, the capability indication information at least carrying capability indication information on whether the second terminal supports to serve as a scheduling terminal or capability indication information on whether the second terminal supports to serve as a scheduling terminal of a specific service.

Optionally, the first response message includes at least one of: identification information of the second terminal; channel quality information between the first terminal and the second terminal; load indication information of the second terminal; power indicating information of the second terminal; moving speed information of the second terminal; channel quality information of the Uu interface of the second terminal; resource indication information allocated by the second terminal; channel quality information between the second terminal and the corresponding terminal for communication with the first terminal; location information of the second terminal.

Optionally, as shown in FIG. 14, the terminal 1200 further includes: a second receiving module 1204, configured to receive an acknowledgement message transmitted by the first terminal, the acknowledgement message is used to inform the second terminals that it will be the scheduling terminal of the first terminal or is used to request the scheduling resource on the direct communication interface.

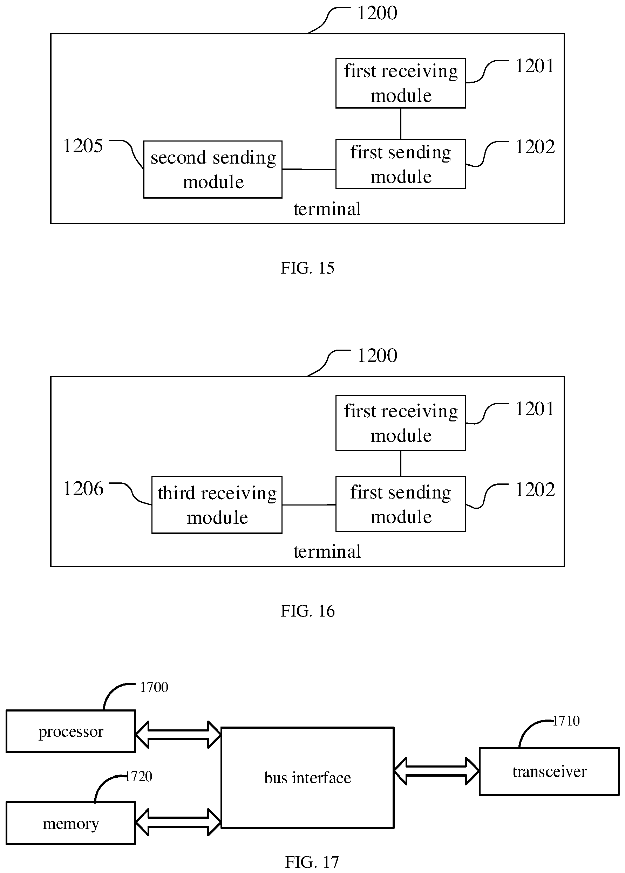

Optionally, if the second terminal is selected by the first terminal as a first scheduling terminal for scheduling the resource of the direct communication interface of the first terminal, as shown in FIG. 15, the terminal 1200 further includes: a second sending module 1205, configured to send first indication information for the reselection of the scheduling terminal to the first terminal.

Optionally, the first indication information for the reselection of the scheduling terminal includes at least one of: second indication information indicating the first terminal to perform the reselection of the scheduling terminal; channel quality of the Uu interface of the first scheduling terminal; indication information indicating the channel quality of the Uu interface of the first scheduling terminal is below a seventh threshold; a channel quality or a distance of the direct communication interface between the first scheduling terminal and the first terminal; a channel quality or a distance of the direct communication interface between the first scheduling terminal and a corresponding terminal for communication with the first terminal; indication information indicating the quality of the direct communication interface channel between the first scheduling terminal and the first terminal is lower than a fourth threshold; indication information indicating the distance between the first scheduling terminal and the first terminal exceeds an eighth threshold; indication information indicating the channel quality of the direct communication interface between the first scheduling terminal and the corresponding terminal for communication with the first terminal is below a ninth threshold; indication information indicating that a distance between the first scheduling terminal and the corresponding terminal for communication with the first terminal exceeds a tenth threshold; the moving speed of the first scheduling terminal; indication information indicating that a change of the moving speed of the first scheduling terminal exceeds the third threshold; a load of the first scheduling terminal; indication information indicating that the load of the first scheduling terminal exceeds an eleventh threshold; indication information indicating that the first scheduling terminal is unwilling to continue to provide a scheduling service for the first terminal. Optionally, as shown in FIG. 16, the terminal 1200 further includes: if the second terminal is selected by the first terminal as a first scheduling terminal for scheduling the resource of the direct communication interface of the first terminal, and the first terminal establishes a scheduling relationship with a second scheduling terminal, the second terminal receives a notification message transmitted by the first terminal for notifying that the first terminal has reselected a scheduling terminal, and if the first terminal and the second terminal establish a RRC connection, releasing the RRC connection.

It should be noted that the terminal 1200 in the present embodiment may be a second terminal of any method embodiment of the present disclosure. Any embodiment of the terminal in the method embodiment may be implemented by the terminal 1200 in the present embodiment, and the same benefits may be achieved, which will not be described in detail herein.

FIG. 17 is a block diagram of another terminal according to some embodiments of the disclosure, which is the first terminal. As shown in FIG. 17, the terminal comprises a transceiver 1710, a memory 1720, a processor 1700, and a program stored in the memory 1720 and executed by the processor 1700, wherein:
The transceiver 1710 is configured to send a first request message for searching for a scheduling terminal, and receive a first response message corresponding to the first request message sent by at least one second terminal each supporting or enabling a scheduling function, and determine a first scheduling terminal for scheduling a resource of a direct communication interface of the first terminal, the first scheduling terminal being at least one of the at least one second terminals; or the transceiver 1710 is configured to send a first request message for searching for a scheduling terminal and to receive a first response message corresponding to the first request message sent by at least one second terminal, wherein the scheduling function is supported or enabled by each second terminal.

The processor 1700 is configured to determine a first scheduling terminal for scheduling the resource of the direct communication interface of the first terminal, the first scheduling terminal being at least one of the at least one second terminal.

Wherein, transceiver 1710 may be configured to receive and send data under the control of processor 1700.

In FIG. 17, the bus architecture can include any number of interconnecting buses and bridges, various circuits of one or more processors represented by processor 1700 and memory represented by memory 1720 are linked together. The bus architecture can also link various other circuits such as peripherals, voltage regulators, and power management circuits, which are well known in the art, and therefore, will not be described further herein. The bus interface provides the interface. The transceiver 1710, which can be a plurality of components including a transmitter and a receiver, provides a unit for communicating with various other devices over the transmission medium. Processor 1700 is responsible for managing the bus architecture and processing in general, and memory 1720 may store data used by processor 1700 when performing operations.

It should be noted that memory 1720 is not limited to just being on the terminal and memory 1720 and processor 1700 may be separate from each other at different geographic locations.

Optionally, a triggering condition for sending the first request message is an event trigger or a periodic trigger.

The first triggering event for sending the first request message includes at least one of: a channel quality of a Uu interface of the first terminal being lower than a first threshold; a channel quality of the direct communication interface of the first terminal being lower than a second threshold.

Optionally, in the case that the triggering condition for sending the first request message is a periodic trigger, a sending period of the first request message is determined based on the first terminal or is determined based on each service of the first terminal and a value of the sending period may be determined by the first terminal itself or may be preconfigured or configured by the network.

Optionally, the first request message includes at least one of: a service identifier of a service of the direct communication interface of the first terminal; a QoS identifier of the service of the direct communication interface of the first terminal; location information of the first terminal; group identification information to which the first terminal belongs; identification information of the first terminal; identification information of a corresponding terminal for communication with the first terminal; indication information indicating whether an RRC connection is to be established between the first terminal and the scheduling terminal.

Optionally, service of the direct communication interface may be all or part of the service of the direct communication interface, wherein the part of the service may include at least one of the following: a service in which data is currently to be sent; a service to be scheduled by the first scheduling terminal.

Optionally, the first response message includes at least one of: identification information of the second terminal; channel quality information between the first terminal and the second terminal; load indication information of the second terminal; power indicating information of the second terminal; moving speed information of the second terminal; channel quality information of the Uu interface of the second terminal; resource indication information allocated by the second terminal; channel quality information between the second terminal and the corresponding terminal for communication with the first terminal; location information of the second terminal.

Optionally, the at least one second terminal is N second terminals, and the determining the first scheduling terminal for scheduling the resource of the direct communication interface of the first terminal includes: selecting M second terminals from the N second terminals, the M second terminals being first scheduling terminals for scheduling the resource of the direct communication interface resources of the first terminal, and wherein N is an integer greater than 1, and wherein M is an integer greater than or equal to 1 and less than or equal to N.

Optionally, the selecting M second terminals from the N second terminals includes: selecting M second terminals from the N second terminals according to terminal information of the N second terminals.

Wherein the terminal information includes at least one of the following: a moving speed, a current remaining power, a load, a channel quality and location information, the channel quality includes at least one of the following: a channel quality with the first terminal; a channel quality of the Uu interface; a channel quality with a corresponding terminal for communication with the first terminal.

Optionally, transceiver 1710 is further configured to: send acknowledgement message to the M second terminals, the acknowledgement message is used to inform the second terminals that it will be the scheduling terminal of the first terminal or is used to request the scheduling resource on the direct communication interface.

Optionally, after determining a first scheduling terminal for scheduling the resource of the direct communication interface of the first terminal, the transceiver 1710 is further configured to: send a second request message for searching for the scheduling terminal; receive a second response message corresponding to the second request message sent by at least one third terminal, wherein each third terminal supports or enables a scheduling function.

The transceiver 1710 or processor 1700 is also configured to determine a second scheduling terminal for scheduling resources of the first terminal, the second scheduling terminal being a terminal of the at least one third terminal

Optionally, the trigger condition sent by the second request message is an event trigger.

Optionally, the second triggering event sent by the second request message includes at least one of: receiving first indication information of reselection of the scheduling terminal transmitted by the first scheduling terminal; measuring a speed change of the first scheduling terminal exceeding a third threshold; a quality of the direct communication interface channel between the first terminal and the first scheduling terminal being lower than a fourth threshold; a channel quality of the direct communication interface between the first terminal and the corresponding terminal for communication with the first terminal being lower than a fifth threshold; QoS satisfaction of a service on the direct communication interface of the first terminal being lower than a sixth threshold.

Optionally, the first indication information for the reselection of the scheduling terminal includes at least one of: second indication information indicating the first terminal to perform the reselection of the scheduling terminal; channel quality of the Uu interface of the first scheduling terminal; indication information indicating the channel quality of the Uu interface of the first scheduling terminal is below a seventh threshold; a channel quality or a distance of the direct communication interface between the first scheduling terminal and the first terminal; a channel quality or a distance of the direct communication interface between the first scheduling terminal and a corresponding terminal for communication with the first terminal; indication information indicating the quality of the direct communication interface channel between the first scheduling terminal and the first terminal is lower than a fourth threshold; indication information indicating the distance between the first scheduling terminal and the first terminal exceeds an eighth threshold; indication information indicating the channel quality of the direct communication interface between the first scheduling terminal and the corresponding terminal for communication with the first terminal is below a ninth threshold; indication information indicating that a distance between the first scheduling terminal and the corresponding terminal for communication with the first terminal exceeds a tenth threshold; the moving speed of the first scheduling terminal; indication information indicating that a change of the moving speed of the first scheduling terminal exceeds the third threshold; a load of the first scheduling terminal; indication information indicating that the load of the first scheduling terminal exceeds an eleventh threshold; indication information indicating that the first scheduling terminal is unwilling to continue to provide a scheduling service for the first terminal. Optionally, before the first terminal obtains resources allocated by the second scheduling terminal, the first terminal uses the resources allocated by the first scheduling terminal for data transmission on the direct communication interface. Optionally, transceiver 1710 is further configured to establish a first scheduling relationship with the first scheduling terminal.

Optionally, the trigger condition for establishing the first scheduling relationship is a third trigger event, and the third trigger event includes at least one of: the channel quality of the Uu interface of the first terminal is lower than a twelfth threshold; the channel quality of the direct communication interface of the first terminal is lower than a thirteenth threshold.

Optionally, transceiver 1710 is further configured to a second scheduling relationship with the second scheduling terminal.

Optionally, a trigger condition for establishing the second scheduling relationship is a fourth trigger event, and the fourth trigger event includes at least one of: receiving fourth indication information indicating reselection of the scheduling terminal from the first scheduling terminal; measuring a speed change of the first scheduling terminal exceeds a fourteenth threshold; the channel quality of the direct communication interface between the first terminal and the first scheduling terminal is lower than a fifteenth threshold; the channel quality of the direct communication interface between the first terminal and the corresponding terminal for communication with the first terminal is below a sixteenth threshold; the QoS satisfaction of the service of the direct communication interface of the first terminal is lower than a seventeenth threshold. The fourth indication information indicating the reselection of the scheduling terminal includes, at least one of the following: fifth indication information indicating the first terminal to perform the reselection of the scheduling terminal; indication information indicating that the channel quality of the Uu interface of the first scheduling terminal is below an eighteenth threshold; indication information indicating that a distance between the first scheduling terminal and the first terminal exceeds a nineteenth threshold; indication information indicating that the channel quality of the direct communication interface between the first scheduling terminal and a corresponding terminal for communication with the first terminal is below a twentieth threshold; indication information indicating that a distance between the first scheduling terminal and the corresponding terminal for communication with the first terminal exceeds a twenty-first threshold; indication information indicating that the load of the first scheduling terminal exceeds a twenty-second threshold; sixth indication information indicating the first scheduling terminal is unwilling to continue to provide the scheduling service for the first terminal.

Optionally, transceiver 1710 is further configured to: send a notification message to the first scheduling terminal, the notification message is used for notifying that the first terminal has reselected a scheduling terminal and if the first terminal establishes an RRC connection with the first scheduling terminal, release the RRC connection.

It should be noted that the terminal in the present embodiment may be the first terminal in any method embodiment in the present disclosure. Any embodiment of the terminal in the method embodiments may be implemented by the terminal in the present embodiment, and the same benefits may be achieved, the description is not repeated herein.

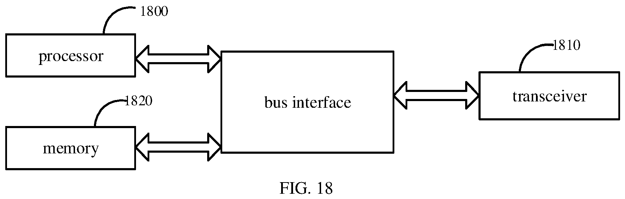

FIG. 18 is a block diagram of another terminal according to some embodiments of the present disclosure that is a second terminal. As shown in FIG. 18, the terminal includes a transceiver 1810, a memory 1820, a processor 1800, and programs stored in the memory 1820 and executed by the processor 1800.

The transceiver 1810 is configured to receive a first request message sent by the first terminal, the first request message being used to search a scheduling terminal; send a first response message corresponding to the first request message to the first terminal, wherein the second terminal supports or enables a resource scheduling function.

The transceiver 1810 may be used for receiving and sending data under the control of the processor 1800.

In FIG. 18, the bus architecture can include any number of interconnected buses and bridges, various circuits of one or more processors represented by processor 1800 and memory represented by memory 1820 are linked together. The bus architecture can also link various other circuits such as peripherals, voltage regulators, and power management circuits, which are well known in the art, and therefore, will not be described further herein. The bus interface provides the interface. The transceiver 1810, which can be a plurality of components including a transmitter and a receiver, provides the unit for communicating with various other devices over the transmission medium. The processor 1800 is responsible for managing the bus architecture and general processing, and the memory 1820 may store data used by the processor 1800 when performing operations.

It should be noted that memory 1820 is not limited to just being on a terminal, and memory 1820 and processor 1800 may be separated at different geographical locations. Optionally, the first request message includes at least one of: a service identifier of a service of a direct communication interface of the first terminal; a QoS identifier of the service of the direct communication interface of the first terminal; location information of the first terminal; group identification information to which the first terminal belongs; identification information of the first terminal; identification information of a corresponding terminal for communication with the first terminal; indication information indicating whether an RRC connection is to be established between the first terminal and the scheduling terminal.

Optionally, service of the direct communication interface may be all or part of the service of the direct communication interface, wherein the part of the service may include at least one of the following: a service in which data is currently to be sent; a service to be scheduled by the first scheduling terminal.

Optionally, the resource scheduling function of the second terminal is enabled as follows: determining, by the second terminal, whether to enable the resource scheduling function, or determining ,by the second terminal, whether to enable the resource scheduling function based on the service; or, indicating, by the network side device, whether to enable the resource scheduling function based on the terminal, either explicitly or implicitly; or, indicating, by the network side device, whether to enable the resource scheduling function based on the service, either explicitly or implicitly. Optionally, the explicit mode includes that the second terminal receives first signaling transmitted by the network side device, the first signaling is used to indicate whether the second terminal needs to enable the resource scheduling function based on terminal or based on service; or the implicit mode includes that the second terminal receives second signaling sent by the network side device, the second signaling is used to inform an enable threshold of the resource scheduling function based on terminal or based on service, the second terminal determines whether to enable the resource scheduling function based on terminal or based on service.

Optionally, transceiver 1810 is further configured to: report capability indication information to the network side device, the capability indication information at least carrying capability indication information on whether the second terminal supports to serve as a scheduling terminal or capability indication information on whether the second terminal supports to serve as a scheduling terminal of a specific service. Optionally, the first response message includes at least one of: identification information of the second terminal; channel quality information between the first terminal and the second terminal; load indication information of the second terminal; power indicating information of the second terminal; moving speed information of the second terminal; channel quality information of the Uu interface of the second terminal; resource indication information allocated by the second terminal; channel quality information between the second terminal and the corresponding terminal for communication with the first terminal; location information of the second terminal. Optionally, transceiver 1810 is further configured to: receive an acknowledgement message transmitted by the first terminal, the acknowledgement message is used to inform the second terminals that it will be the scheduling terminal of the first terminal or is used to request the scheduling resource on the direct communication interface. Optionally, if the second terminal is selected by the first terminal as the first scheduling terminal for scheduling direct communication interface resources of the first terminal, the transceiver 1810 is further configured to: send first indication information for the reselection of the scheduling terminal to the first terminal.

Optionally, the first indication information for the reselection of the scheduling terminal includes at least one of: second indication information indicating the first terminal to perform the reselection of the scheduling terminal; channel quality of the Uu interface of the first scheduling terminal; indication information indicating the channel quality of the Uu interface of the first scheduling terminal is below a seventh threshold; a channel quality or a distance of the direct communication interface between the first scheduling terminal and the first terminal; a channel quality or a distance of the direct communication interface between the first scheduling terminal and a corresponding terminal for communication with the first terminal; indication information indicating the quality of the direct communication interface channel between the first scheduling terminal and the first terminal is lower than a fourth threshold; indication information indicating the distance between the first scheduling terminal and the first terminal exceeds an eighth threshold; indication information indicating the channel quality of the direct communication interface between the first scheduling terminal and the corresponding terminal for communication with the first terminal is below a ninth threshold; indication information indicating that a distance between the first scheduling terminal and the corresponding terminal for communication with the first terminal exceeds a tenth threshold; the moving speed of the first scheduling terminal; indication information indicating that a change of the moving speed of the first scheduling terminal exceeds the third threshold; a load of the first scheduling terminal; indication information indicating that the load of the first scheduling terminal exceeds an eleventh threshold; indication information indicating that the first scheduling terminal is unwilling to continue to provide a scheduling service for the first terminal. Optionally, transceiver 1810 is further configured to: if the second terminal is selected by the first terminal as a first scheduling terminal for scheduling the resource of the direct communication interface of the first terminal, and the first terminal establishes a scheduling relationship with a second scheduling terminal, a notification message is used for notifying that the first terminal has reselected a scheduling terminal, and if the first terminal and the second terminal establish a RRC connection, releasing the RRC connection.

It should be noted that the terminal in the present embodiment may be a second terminal of any method embodiment of the present disclosure. Any embodiment of the terminal in the method embodiment may be implemented by the terminal in the present embodiment, and the same benefits may be achieved, which will not be described in detail herein.

Some embodiments of the present disclosure also provide a computer readable storage medium having stored thereon a computer program which, when executed by a processor, performs the steps of the method for determining a scheduling terminal at the first terminal side provided by some embodiments of the present disclosure or the steps of the method for determining a scheduling terminal at the second terminal side provided by some embodiments of the present disclosure.

In the several embodiments provided in this disclosure, it should be understood that the method and device can be implemented in other ways. For example, the device embodiments described above are only illustrative. For example, the division of the units is only a logical function division, and there may be other divisions in actual implementation, for example, multiple units or components may be combined or can be integrated into another system, or some elements can be ignored or not implemented. In addition, the displayed or discussed mutual coupling or direct coupling or communication connection may be indirect coupling or communication connection through some interfaces, devices or units, and may be in electrical, mechanical or other forms.

In addition, the functional units in the various embodiments of the present disclosure may be integrated into one processing unit, or each unit may be separately physically included, or two or more units may be integrated into one unit. The integrated unit may be implemented in the form of hardware, or in the form of hardware plus software functional units.

The integrated unit implemented in the form of a software functional unit may be stored in a computer readable storage medium. The software functional unit is stored in a storage medium, and includes several instructions to enable a computer device (which may be a personal computer, a server, or a network device, etc.) to execute some steps of the methods in the various embodiments of the present disclosure. The storage media include: U disk, mobile hard disk, read-only memory (ROM), random access memory (RAM), magnetic disks or optical disks, etc., which can store program codes. The above embodiments are for illustrative purposes only, but the present disclosure is not limited thereto. Obviously, a person skilled in the art may make further modifications and improvements without departing from the spirit of the present disclosure, and these modifications and improvements shall also fall within the scope of the present disclosure.

## Claims

1. A method for determining a scheduling terminal, comprising:
sending, by a first terminal, a first request message, wherein the first request message is used for searching for the scheduling terminal;
receiving, by the first terminal, a first response message corresponding to the first request message sent by at least one second terminal, wherein each second terminal supports or enables a scheduling function;
determining, by the first terminal, a first scheduling terminal for scheduling a resource of a direct communication interface of the first terminal, wherein the first scheduling terminal is at least one of the at least one second terminal.

2. The method according to claim 1, wherein a triggering condition for sending the first request message is an event trigger or a periodic trigger.

3. The method according to claim 2, wherein a first triggering event for sending the first request message includes at least one of:
a channel quality of a Uu interface of the first terminal being lower than a first threshold; or
a channel quality of the direct communication interface of the first terminal being lower than a second threshold.

4. The method according to claim 2, wherein in the case that the triggering condition for sending the first request message is the periodic trigger, a sending period of the first request message is determined based on the first terminal or is determined based on each service of the first terminal and a value of the sending period is determined by the first terminal or is preconfigured or configured by the network.

5. The method according to claim 1, wherein the first request message includes at least one of:
a service identifier of a service of the direct communication interface of the first terminal;
a quality of service (QoS) identifier of the service of the direct communication interface of the first terminal;
location information of the first terminal;
group identification information to which the first terminal belongs;
identification information of the first terminal;
identification information of a corresponding terminal for communication with the first terminal;
indication information indicating whether a Radio Resource Control (RRC) connection is to be established between the first terminal and the scheduling terminal.

6. The method according to claim 5, wherein the service of the direct communication interface is all or part of services of the direct communication interface, wherein the part of the services include at least one of the following:
a service in which data is currently to be sent;
a service to be scheduled by the first scheduling terminal.

7. The method according to claim 1, wherein the first response message includes at least one of:
identification information of the second terminal;
channel quality information between the first terminal and the second terminal;
load indication information of the second terminal;
power indicating information of the second terminal;
moving speed information of the second terminal;
channel quality information of a Uu interface of the second terminal;
resource indication information allocated by the second terminal;
channel quality information between the second terminal and the corresponding terminal for communication with the first terminal;
location information of the second terminal.

8. The method according to claim 1, wherein the at least one second terminal is N second terminals, and the determining, by the first terminal, a first scheduling terminal for scheduling a resource of a direct communication interface of the first terminal comprises:
selecting, by the first terminal, M second terminals from the N second terminals, the M second terminals being first scheduling terminals for scheduling the resource of the direct communication interface resources of the first terminal, and wherein N is an integer greater than 1, and wherein M is an integer greater than or equal to 1 and less than or equal to N.

9. The method according to claim 8, wherein the selecting, by the first terminal, M second terminals from the N second terminals, comprises:
selecting, by the first terminal, M second terminals from the N second terminals according to terminal information of the N second terminals;
wherein the terminal information includes at least one of the following:
a moving speed, a current remaining power, a load, a channel quality and location information, the channel quality includes at least one of the following:
a channel quality with the first terminal;
a channel quality of the Uu interface;
a channel quality with the corresponding terminal for communication with the first terminal.

10. The method according to claim 8, further comprising:
sending, by the first terminal, an acknowledgement message to the M second terminals, wherein the acknowledgement message is used to inform the second terminal to be serve as the scheduling terminal of the first terminal or is used to request a scheduling resource on the direct communication interface.

11. The method according to claim 1, wherein after the determining, by the first terminal, a first scheduling terminal for scheduling the resource of the direct communication interface of the first terminal, the method further comprises:
sending, by the first terminal, a second request message, wherein the second request message is used for searching for the scheduling terminal;
receiving, by the first terminal, a second response message corresponding to the second request message sent by at least one third terminal, wherein each third terminal supports or enables a scheduling function; and
determining, by the first terminal, a second scheduling terminal for scheduling the resource of the first terminal, wherein the second scheduling terminal is a terminal of the at least one third terminal.

12. The method according to claim 11, wherein the trigger condition sent by the second request message is an event trigger.

13. The method according to claim 12, wherein a second triggering event sent by the second request message includes at least one of:
receiving first indication information of reselection of the scheduling terminal sent by the first scheduling terminal;
measuring a speed change of the first scheduling terminal exceeding a third threshold;
a channel quality of the direct communication interface between the first terminal and the first scheduling terminal being lower than a fourth threshold;
a channel quality of the direct communication interface between the first terminal and the corresponding terminal for communication with the first terminal being lower than a fifth threshold;
QoS satisfaction of a service on the direct communication interface of the first terminal being lower than a sixth threshold.

14. The method according to claim 13, wherein the first indication information for the reselection of the scheduling terminal includes at least one of:
second indication information indicating the first terminal to perform the reselection of the scheduling terminal;
channel quality of the Uu interface of the first scheduling terminal;
indication information indicating the channel quality of the Uu interface of the first scheduling terminal is below a seventh threshold;
a channel quality or a distance of the direct communication interface between the first scheduling terminal and the first terminal;
a channel quality or a distance of the direct communication interface between the first scheduling terminal and the corresponding terminal for communication with the first terminal;
indication information indicating the channel quality of the direct communication interface between the first scheduling terminal and the first terminal is lower than a fourth threshold;
indication information indicating the distance between the first scheduling terminal and the first terminal exceeds an eighth threshold;
indication information indicating the channel quality of the direct communication interface between the first scheduling terminal and the corresponding terminal for communication with the first terminal is below a ninth threshold;
indication information indicating that a distance between the first scheduling terminal and the corresponding terminal for communication with the first terminal exceeds a tenth threshold;
the moving speed of the first scheduling terminal;
indication information indicating that a change of the moving speed of the first scheduling terminal exceeds the third threshold;
a load of the first scheduling terminal;
third indication information indicating that the load of the first scheduling terminal exceeds an eleventh threshold;
indication information indicating that the first scheduling terminal is unwilling to continue to provide a scheduling service for the first terminal.

15. The method according to claim 11, wherein before the first terminal obtains a resource allocated by the second scheduling terminal, the first terminal uses a resource allocated by the first scheduling terminal for data transmission on the direct communication interface.

16. The method according to claim 1, further comprising:
establishing, by the first terminal, a first scheduling relationship with the first scheduling terminal.

17. The method according to claim 16, wherein a trigger condition for establishing the first scheduling relationship is a third trigger event, and the third trigger event includes at least one of:
the channel quality of the Uu interface of the first terminal being lower than a twelfth threshold;
the channel quality of the direct communication interface of the first terminal being lower than a thirteenth threshold.

18. The method according to claim 11, further comprising:
establishing, by the first terminal, a second scheduling relationship with the second scheduling terminal.

19. The method according to claim 18, wherein a trigger condition for establishing the second scheduling relationship is a fourth trigger event, and the fourth trigger event includes at least one of:
receiving fourth indication information indicating reselection of the scheduling terminal from the first scheduling terminal;
measuring a speed change of the first scheduling terminal exceeds a fourteenth threshold;
the channel quality of the direct communication interface between the first terminal and the first scheduling terminal being lower than a fifteenth threshold;
the channel quality of the direct communication interface between the first terminal and the corresponding terminal for communication with the first terminal being below a sixteenth threshold;
the QoS satisfaction of the service of the direct communication interface of the first terminal being lower than a seventeenth threshold.

20. The method according to claim 19, wherein the fourth indication information indicating the reselection of the scheduling terminal includes at least one of the following:
fifth indication information indicating the first terminal to perform the reselection of the scheduling terminal;
indication information indicating that the channel quality of the Uu interface of the first scheduling terminal is below an eighteenth threshold;
indication information indicating that a distance between the first scheduling terminal and the first terminal exceeds a nineteenth threshold;
indication information indicating that the channel quality of the direct communication interface between the first scheduling terminal and a corresponding terminal for communication with the first terminal is below a twentieth threshold;
indication information indicating that a distance between the first scheduling terminal and the corresponding terminal for communication with the first terminal exceeds a twenty-first threshold;
indication information indicating that the load of the first scheduling terminal exceeds a twenty-second threshold;
sixth indication information indicating the first scheduling terminal is unwilling to continue to provide the scheduling service for the first terminal.

21. The method according to claim 18, further comprising:
sending, by the first terminal, a notification message to the first scheduling terminal, wherein the notification message is used for notifying that the first terminal has reselected a scheduling terminal; and if the first terminal establishes an RRC connection with the first scheduling terminal, releasing the RRC connection.

22. A method for determining a scheduling terminal, comprising:
receiving, by a second terminal, a first request message sent by a first terminal, wherein the first request message is used for searching for the scheduling terminal;
sending, by the second terminal, a first response message corresponding to the first request message to the first terminal, wherein the second terminal supports or enables a resource scheduling function.

23. The method according to claim 22, wherein the first request message includes at least one of:
a service identifier of a service of the direct communication interface of the first terminal;
a quality of service (QoS) identifier of the service of the direct communication interface of the first terminal;
location information of the first terminal;
group identification information to which the first terminal belongs;
identification information of the first terminal;
identification information of a corresponding terminal for communication with the first terminal;
indication information indicating whether a Radio Resource Control (RRC) connection is to be established between the first terminal and the scheduling terminal.

24. The method according to claim 23, wherein the service of the direct communication interface is all or part of services of the direct communication interface, wherein the part of the services include at least one of the following:
a service in which data is currently to be sent;
a service to be scheduled by the first scheduling terminal.

25. The method according to claim 22, wherein the resource scheduling function of the second terminal is enabled as follows:
determining, by the second terminal, whether to enable the resource scheduling function, or
determining, by the second terminal, whether to enable the resource scheduling function based on the service; or,
indicating, by the network side device, whether to enable the resource scheduling function based on the terminal explicitly or implicitly; or,
indicating, by the network side device, whether to enable the resource scheduling function based on the service explicitly or implicitly.

26. The method according to claim 25, wherein the explicit mode includes that the second terminal receives first signaling sent by the network side device, the first signaling is used to indicate whether the second terminal needs to enable the resource scheduling function based on the terminal or based on the service; or
the implicit mode includes that the second terminal receives second signaling sent by the network side device, the second signaling is used to inform an enable threshold of the resource scheduling function based on the terminal or based on the service, the second terminal determines whether to enable the resource scheduling function based on the terminal or based on the service.

27. The method according to claim 25, further comprising:
reporting, by the second terminal, capability indication information to the network side device, the capability indication information at least carrying capability indication information on whether the second terminal supports to serve as the scheduling terminal or capability indication information on whether the second terminal supports to serve as a scheduling terminal of a specific service.

28. The method according to claim 22, wherein the first response message includes at least one of:
identification information of the second terminal;
channel quality information between the first terminal and the second terminal;
load indication information of the second terminal;
power indicating information of the second terminal;
moving speed information of the second terminal;
channel quality information of a Uu interface of the second terminal;
resource indication information allocated by the second terminal;
channel quality information between the second terminal and the corresponding terminal for communication with the first terminal;
location information of the second terminal.

29. The method according to claim 22, further comprising:
receiving, by the second terminal, an acknowledgement message sent by the first terminal, wherein the acknowledgement message is used to inform the second terminal to be serve as the scheduling terminal of the first terminal or is used to request a scheduling resource on the direct communication interface.

30. The method according to claim 22, wherein if the second terminal is selected by the first terminal as a first scheduling terminal for scheduling the resource of the direct communication interface of the first terminal, the method further comprises:
sending, by the second terminal, first indication information for the reselection of the scheduling terminal to the first terminal.

31. The method according to claim 30, wherein the first indication information for the reselection of the scheduling terminal includes at least one of:
second indication information indicating the first terminal to perform the reselection of the scheduling terminal;
channel quality of the Uu interface of the first scheduling terminal;
indication information indicating the channel quality of the Uu interface of the first scheduling terminal is below a seventh threshold;
a channel quality or a distance of the direct communication interface between the first scheduling terminal and the first terminal;
a channel quality or a distance of the direct communication interface between the first scheduling terminal and the corresponding terminal for communication with the first terminal;
indication information indicating the channel quality of the direct communication interface between the first scheduling terminal and the first terminal is lower than a fourth threshold;
indication information indicating the distance between the first scheduling terminal and the first terminal exceeds an eighth threshold;
indication information indicating the channel quality of the direct communication interface between the first scheduling terminal and the corresponding terminal for communication with the first terminal is below a ninth threshold;
indication information indicating that a distance between the first scheduling terminal and the corresponding terminal for communication with the first terminal exceeds a tenth threshold;
the moving speed of the first scheduling terminal;
indication information indicating that a change of the moving speed of the first scheduling terminal exceeds the third threshold;
a load of the first scheduling terminal;
third indication information indicating that the load of the first scheduling terminal exceeds an eleventh threshold;
indication information indicating that the first scheduling terminal is unwilling to continue to provide a scheduling service for the first terminal.

32. The method according to claim 22, further comprising:
if the second terminal is selected by the first terminal as a first scheduling terminal for scheduling the resource of the direct communication interface of the first terminal, and the first terminal establishes a scheduling relationship with a second scheduling terminal, receiving, by the second terminal, a notification message sent by the first terminal for notifying that the first terminal has reselected a scheduling terminal, and if the first terminal and the second terminal establish a RRC connection, releasing the RRC connection.

33. A terminal being a first terminal, comprising:
a first sending module, configured to send a first request message, wherein the first request message is used for searching for the scheduling terminal;
a first receiving module, configured to receive a first response message corresponding to the first request message sent by at least one second terminal, wherein each second terminal supports or enables a scheduling function;
a first determining module, configured to determine a first scheduling terminal for scheduling a resource of a direct communication interface of the first terminal, wherein the first scheduling terminal is at least one of the at least one second terminal.

34. The terminal according to claim 33, wherein the first request message includes at least one of:
a service identifier of a service of the direct communication interface of the first terminal;
a quality of service (QoS) identifier of the service of the direct communication interface of the first terminal;
location information of the first terminal;
group identification information to which the first terminal belongs;
identification information of the first terminal;
identification information of a corresponding terminal for communication with the first terminal;
indication information indicating whether a Radio Resource Control (RRC) connection is to be established between the first terminal and the scheduling terminal.

35. The terminal according to claim 33, wherein the first response message includes at least one of:
identification information of the second terminal;
channel quality information between the first terminal and the second terminal;
load indication information of the second terminal;
power indicating information of the second terminal;
moving speed information of the second terminal;
channel quality information of a Uu interface of the second terminal;
resource indication information allocated by the second terminal;
channel quality information between the second terminal and the corresponding terminal for communication with the first terminal;
location information of the second terminal.

36. A terminal being a second terminal, comprising:
a first receiving module, configured to receive a first request message sent by a first terminal, wherein the first request message is used for searching for the scheduling terminal;
a first sending module, configured to send a first response message corresponding to the first request message to the first terminal, wherein the second terminal supports or enables a resource scheduling function.

37. The terminal according to claim 36, wherein the first request message includes at least one of:
a service identifier of a service of the direct communication interface of the first terminal;
a quality of service (QoS) identifier of the service of the direct communication interface of the first terminal;
location information of the first terminal;
group identification information to which the first terminal belongs;
identification information of the first terminal;
identification information of a corresponding terminal for communication with the first terminal;
indication information indicating whether a Radio Resource Control (RRC) connection is to be established between the first terminal and the scheduling terminal.

38. The terminal according to claim 36, wherein the first response message includes at least one of:
identification information of the second terminal;
channel quality information between the first terminal and the second terminal;
load indication information of the second terminal;
power indicating information of the second terminal;
moving speed information of the second terminal;
channel quality information of a Uu interface of the second terminal;
resource indication information allocated by the second terminal;
channel quality information between the second terminal and the corresponding terminal for communication with the first terminal;
location information of the second terminal.

39. A terminal being a first terminal, comprising: a transceiver, a memory, a processor, and a program stored on the memory and executed by the processor, wherein:
the transceiver is configured to send a first request message, wherein the first request message is used for searching for the scheduling terminal; receive a first response message corresponding to the first request message sent by at least one second terminal, wherein each second terminal supports or enables a scheduling function; and determine a first scheduling terminal for scheduling a resource of a direct communication interface of the first terminal, wherein the first scheduling terminal is at least one of the at least one second terminal; or
the transceiver is configured to send a first request message for searching for a scheduling terminal and to receive a first response message corresponding to the first request message sent by at least one second terminal, wherein each second terminal supports or enables the scheduling function;
the processor is configured to determine a first scheduling terminal for scheduling the resource of the direct communication interface of the first terminal, the first scheduling terminal being at least one of the at least one second terminal.

40. The terminal according to claim 39, wherein the first request message includes at least one of:
a service identifier of a service of the direct communication interface of the first terminal;
a quality of service (QoS) identifier of the service of the direct communication interface of the first terminal;
location information of the first terminal;
group identification information to which the first terminal belongs;
identification information of the first terminal;
identification information of a corresponding terminal for communication with the first terminal;
indication information indicating whether a Radio Resource Control (RRC) connection is to be established between the first terminal and the scheduling terminal.

41. The terminal according to claim 39, wherein the first response message includes at least one of:
identification information of the second terminal;
channel quality information between the first terminal and the second terminal;
load indication information of the second terminal;
power indicating information of the second terminal;
moving speed information of the second terminal;
channel quality information of a Uu interface of the second terminal;
resource indication information allocated by the second terminal;
channel quality information between the second terminal and the corresponding terminal for communication with the first terminal;
location information of the second terminal.

42. A terminal being a second terminal, comprising: a transceiver, a memory, a processor, and a program stored on the memory and executed by the processor, wherein:
the transceiver is configured to receive a first request message sent by the first terminal, the first request message being used to search a scheduling terminal; send a first response message corresponding to the first request message to the first terminal, wherein the second terminal supports or enables a resource scheduling function.

43. The terminal according to claim 42, wherein the first request message includes at least one of:
a service identifier of a service of the direct communication interface of the first terminal;
a quality of service (QoS) identifier of the service of the direct communication interface of the first terminal;
location information of the first terminal;
group identification information to which the first terminal belongs;
identification information of the first terminal;
identification information of a corresponding terminal for communication with the first terminal;
indication information indicating whether a Radio Resource Control (RRC) connection is to be established between the first terminal and the scheduling terminal.

44. The terminal according to claim 42, wherein the first response message includes at least one of:
identification information of the second terminal;
channel quality information between the first terminal and the second terminal;
load indication information of the second terminal;
power indicating information of the second terminal;
moving speed information of the second terminal;
channel quality information of a Uu interface of the second terminal;
resource indication information allocated by the second terminal;
channel quality information between the second terminal and the corresponding terminal for communication with the first terminal;
location information of the second terminal.

45. A computer readable storage medium having a computer program stored thereon, wherein the program is executed by a processor to implement the steps in the method for determining a scheduling terminal according to any one of claims 1 to 21, or implement the steps in the method for determining a scheduling terminal according to any one of claims 22 to 32.
